# FASCICULE DE BREVET EUROPEEN

(11) **EP 4 014 795 B1**
(45) Date de publication et mention de la délivrance du brevet: **03.01.2024**
(21) Numéro de dépôt: 21213826.7
(22) Date de dépôt: 10.12.2021
(51) Int. Cl.: A47J 27/08, A47J 27/09

(54) **AUTOCUISEUR À BAIONNETTE POURVU D'UN ORGANE DE COMMANDE AU COMPORTEMENT DYNAMIQUE AMÉLIORÉ**
SCHNELLKOCHTOPF MIT BAJONETTVERSCHLUSS, DER MIT EINEM STEUERORGAN MIT VERBESSERTEM DYNAMISCHEM VERHALTEN AUSGESTATTET IST
BAYONET PRESSURE COOKER PROVIDED WITH AN IMPROVED MEMBER FOR CONTROLLING DYNAMIC BEHAVIOUR

(30) Priorité: 18.12.2020 FR 2013663
(43) Date de publication de la demande: 22.06.2022
(73) Titulaire: SEB S.A., 69130 Ecully (FR)
(72) Inventeur: CHAMEROY, Eric, 21260 Veronnes (FR); RHETAT, Eric Christian Jacques, 21000 Dijon (FR); BARAILLE, Eric Laurent, 21121 Fontaine les Dijon (FR)
(74) Mandataire: Cabinet Didier Martin

(56) Documents cités:
- EP-A1- 2 898 800
- EP-A1- 3 100 652

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant une cuve, un couvercle destiné à être verrouillé relativement à la cuve pour former avec elle une enceinte de cuisson apte à monter en pression, un système de verrouillage à baïonnette configuré pour assurer le verrouillage et le déverrouillage du couvercle relativement à la cuve par pivotement du couvercle relativement à la cuve, un support attaché audit couvercle de façon que ce dernier puisse pivoter relativement audit support selon un premier axe de rotation entre deux positions correspondant respectivement à une configuration de déverrouillage et une configuration de verrouillage, et un organe de commande du verrouillage / déverrouillage actionnable manuellement qui est d'une part attaché audit support par une liaison mécanique autorisant le déplacement manuel dudit organe de commande relativement audit support, et d'autre part connecté au couvercle par un dispositif de transformation dudit déplacement manuel de l'organe de commande en pivotement du couvercle relativement au support.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.

Un tel système de verrouillage à baïonnette donne globalement satisfaction, notamment en raison de son poids relativement faible, de sa simplicité de fabrication et de sa fiabilité.

Il présente toutefois, dans ses modes de réalisation les plus élémentaires, certains inconvénients significatifs, notamment en matière de praticité et d'ergonomie.

Afin de remédier à ces inconvénients, il a été proposé un autocuiseur à baïonnette pourvu d'un mécanisme de commande à démultiplication d'efforts reposant sur la mise en oeuvre d'une arche de commande rotative qui entraîne le déplacement à coulissement d'un chariot lui-même actionnant en réponse un système de biellette qui permet l'entraînement en rotation du couvercle.

Un tel système donne toute satisfaction en matière de simplicité d'utilisation et d'ergonomie. Il présente toutefois lui aussi certains inconvénients.

En effet, le système de démultiplication d'effort mis en oeuvre, qui repose sur la coopération de multiples composants (arche rotative, chariot coulissant, biellette...) est de construction relativement complexe, ce qui influe négativement sur le prix de revient de l'appareil de cuisson. Cette conception fait en outre appel à de multiples pièces en mouvement, ce qui est susceptible d'induire un risque en matière de fiabilité et de robustesse sur le long terme. La minimisation de ce risque peut dès lors impliquer de surdimensionner certaines pièces et exiger de recourir à des montages particulièrement précis, susceptibles de compliquer l'industrialisation de la fabrication. Ce mécanisme de commande connu est également relativement encombrant, ce qui peut gêner et compliquer l'intégration d'autres composants fonctionnels (par exemple: soupapes, minuteur, capteur...). Enfin, même si la démultiplication des efforts procurée par cet autocuiseur connu s'avère particulièrement appréciable, le confort d'utilisation n'est malgré tout pas optimal. En effet, l'actionnement manuel de l'arche de commande rotative de cet autocuiseur connu conduit à une mise rotation du couvercle qui peut être relativement brusque et saccadée, avec une tendance au décentrage intempestif du couvercle relativement à la cuve qui induit des frictions parasites. Ces effets indésirables nuisent à l'ergonomie de l'appareil et peuvent être anxiogènes pour l'utilisateur.

Le document EP-3 100 652 A1 décrit un appareil de cuisson sous pression comportant une cuve, un couvercle, un système de verrouillage à baïonnette, un organe de commande du verrouillage qui est attaché à un support par une liaison mécanique autorisant le déplacement dudit organe de commande et est connecté au couvercle par un dispositif de transformation dudit déplacement de l'organe de commande en pivotement du couvercle, ladite liaison mécanique étant conçue pour que ledit déplacement manuel de l'organe de commande soit formé par un déplacement en rotation autour d'un axe de rotation parallèle à l'axe vertical central et/ou par un déplacement en translation.

L'invention se propose par conséquent de remédier aux différents inconvénients exposés précédemment et de proposer un nouvel appareil de cuisson d'aliments sous pression qui soit de conception particulièrement simple et compacte, ainsi que de construction fiable et aisément industrialisable, tout en étant particulièrement ergonomique et en procurant un confort d'utilisation remarquable.

Un autre objet de l'invention vise à proposer un nouvel appareil de cuisson d'aliments sous pression particulièrement pratique à utiliser.

Un autre objet de l'invention vise à proposer un nouvel appareil de cuisson d'aliments sous pression de conception particulièrement légère et robuste.

Un autre objet de l'invention vise à proposer un nouvel appareil de cuisson d'aliments sous pression qui permet une mise en rotation particulièrement progressive et continue du couvercle entre ses configurations de verrouillage et de déverrouillage, en minimisant les frictions intempestives.

Un autre objet de l'invention vise à proposer un nouvel appareil de cuisson d'aliments sous pression particulièrement compact.

Un autre objet de l'invention vise à proposer un nouvel appareil de cuisson d'aliments sous pression dont la conception permet d'optimiser la fabrication industrielle et autorise une grande souplesse d'implantation des éléments fonctionnels de l'appareil.

Un autre objet de l'invention vise à proposer un nouvel appareil de cuisson d'aliments sous pression dont le nettoyage est facilité et dont la conception permet de faciliter le montage et la différenciation des produits en usine.

Un autre objet de l'invention vise à proposer un nouvel appareil de cuisson d'aliments sous pression qui procure un haut de niveau de sécurité d'utilisation.

Un autre objet de l'invention vise à proposer un nouvel appareil de cuisson d'aliments sous pression particulièrement facile à utiliser, y compris à l'aide d'une seule main.

Un autre objet de l'invention vise à proposer un nouvel appareil de cuisson d'aliments sous pression dont l'utilisation est particulièrement intuitive.

Un autre objet de l'invention vise à proposer un nouvel appareil de cuisson d'aliments sous pression dont la conception permet de minimiser l'effort manuel exercé par un utilisateur pour commander le verrouillage ou le déverrouillage du couvercle relativement à la cuve.

Un autre objet de l'invention vise à proposer un nouvel appareil de cuisson d'aliments sous pression qui est facile et pratique à ranger et à laver en lave-vaisselle.

Les objets assignés à l'invention sont atteints à l'aide d'un appareil de cuisson d'aliments sous pression selon la revendication 1.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

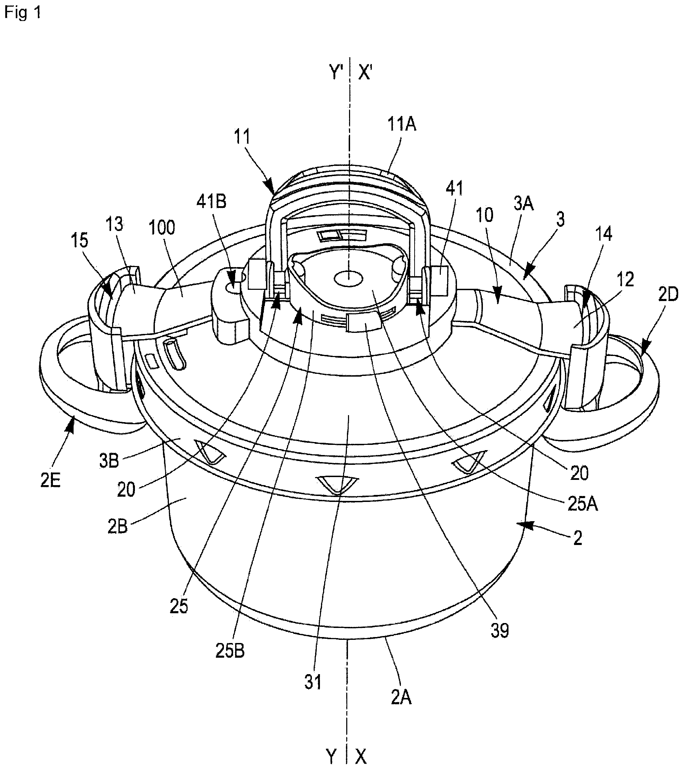

La figure 1 illustre, selon une vue en perspective schématique, un appareil de cuisson d'aliments sous pression conforme à l'invention, qui se trouve dans une configuration de déverrouillage dans laquelle le couvercle est rapporté sur la cuve selon un agencement relatif prédéterminé permettant au système de verrouillage à baïonnette de verrouiller le couvercle à la cuve par pivotement du couvercle, ledit agencement relatif prédéterminé correspondant ainsi à une configuration d'attente de verrouillage de l'appareil, dont l'organe de commande du verrouillage/déverrouillage se trouve dans une position déployée correspondant au déverrouillage du couvercle relativement à la cuve.
La figure 2 est une vue éclatée de l'appareil de cuisson de la figure 1, lequel se compose en l'espèce de trois sous-ensembles unitaires formés respectivement par un sous-ensemble de cuve, un couvercle et un module unitaire de commande destiné à être fixé, de préférence de façon amovible, au couvercle, pour former avec ce dernier un sous-ensemble de couvercle destiné à être rapporté sur la cuve.

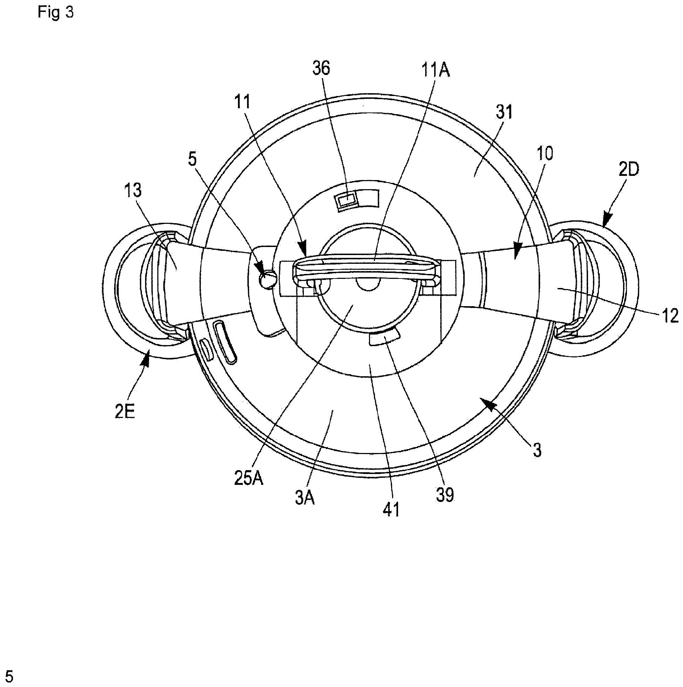

La figure 3 est une vue de dessus de l'appareil de cuisson de la figure 1.
La figure 4 illustre un détail de l'appareil des figures 1 à 3, et plus précisément un détail de réalisation du sous-ensemble de couvercle, selon une vue en perspective de dessus.
La figure 5 est une vue en perspective de dessous du sous-ensemble de couvercle de la figure 4.

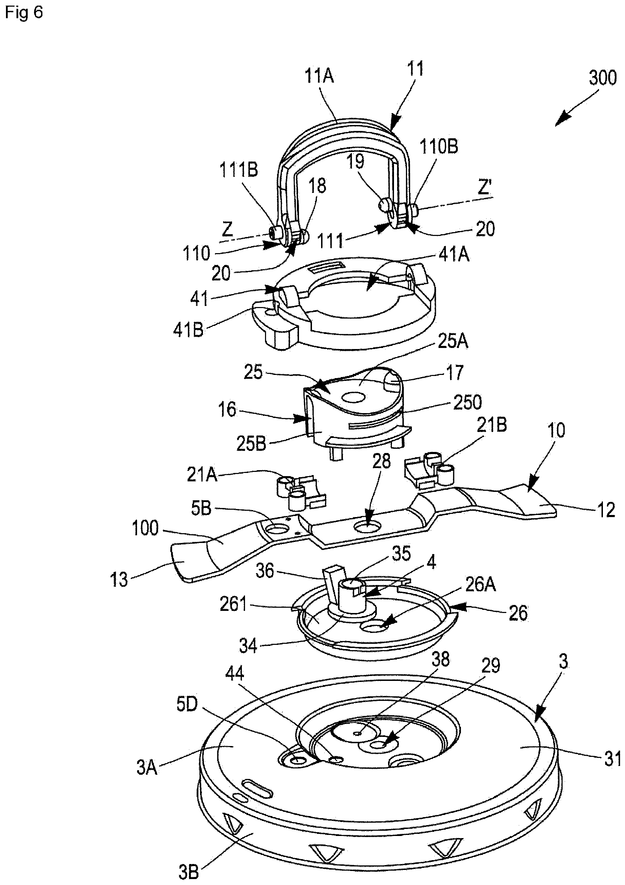

La figure 6 est une vue éclatée permettant de visualiser certains des composants formant le sous-ensemble de couvercle de l'appareil de cuisson des figures 1 à 5.
La figure 7 illustre, selon une vue partiellement en coupe, le module unitaire de commande qui équipe le couvercle de l'appareil de cuisson des figures 1 à 6.

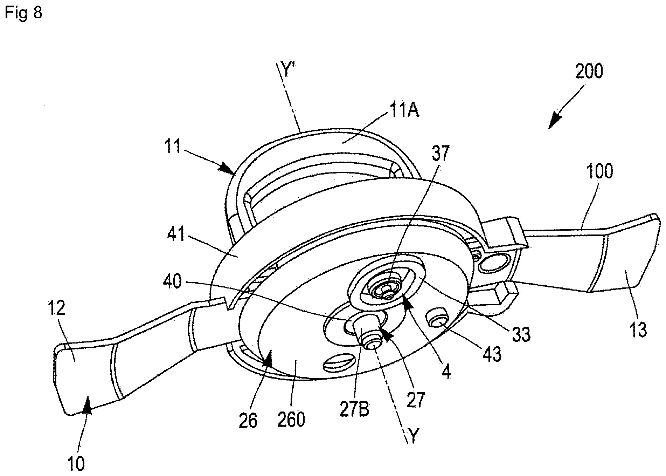

La figure 8 illustre, selon une vue schématique en perspective de dessous, le module unitaire de commande de la figure 7.

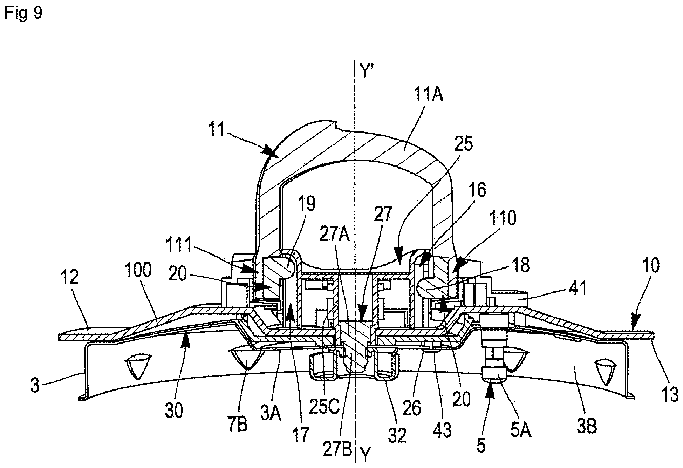

La figure 9 illustre, selon une vue en coupe, le sous-ensemble de couvercle de l'appareil de cuisson de la figure 1.
La figure 10 illustre, selon une vue schématique en perspective de dessus, l'appareil de cuisson des figures précédentes qui se trouve cette fois dans une configuration de verrouillage, selon laquelle le couvercle est verrouillé relativement à la cuve avec l'organe de commande du verrouillage/déverrouillage dans une position rabattue.

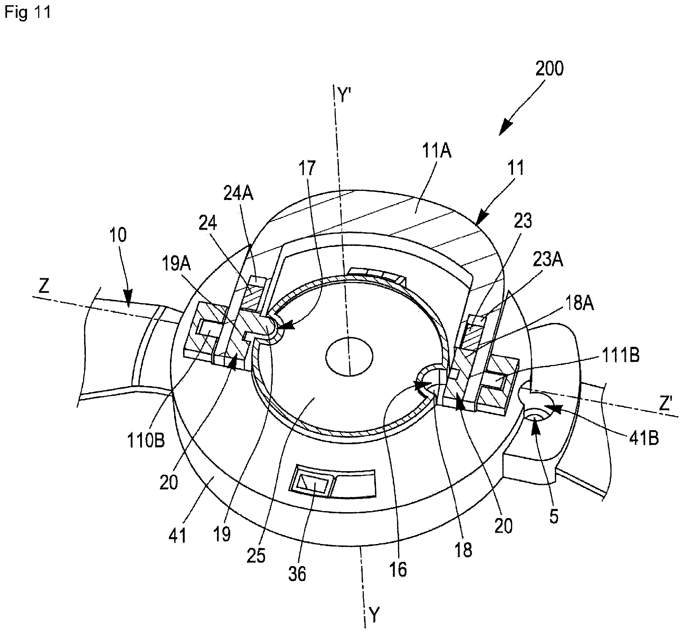

La figure 11 illustre, selon une vue partiellement en coupe, un détail de réalisation de l'appareil de cuisson verrouillé de la figure 10.

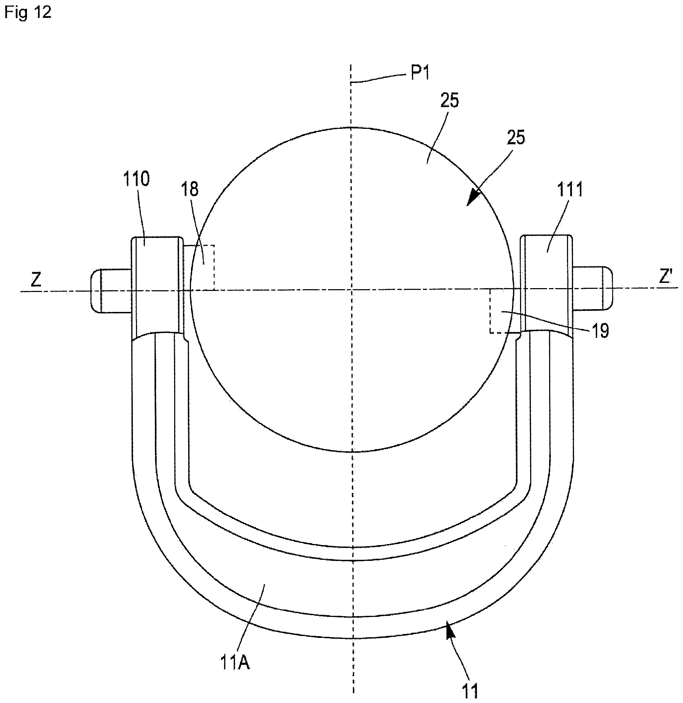

La figure 12 illustre, selon une vue schématique de dessus, un détail de réalisation de l'appareil des figures précédentes avec l'organe de commande du verrouillage/déverrouillage en position rabattue de verrouillage, les conformations motrices portées par ledit organe de commande engageant des conformations réceptrices portées par un moyeu destiné à être solidarisé au couvercle pour entraîner ce dernier en rotation.
La figure 13 illustre schématiquement le passage de l'organe de commande du verrouillage/déverrouillage de sa position rabattue (correspondant au verrouillage) à sa position relevée (correspondant au déverrouillage), le passage de la position rabattue à la position relevée s'effectuant par rotation de l'organe de commande selon une course angulaire de 90°.

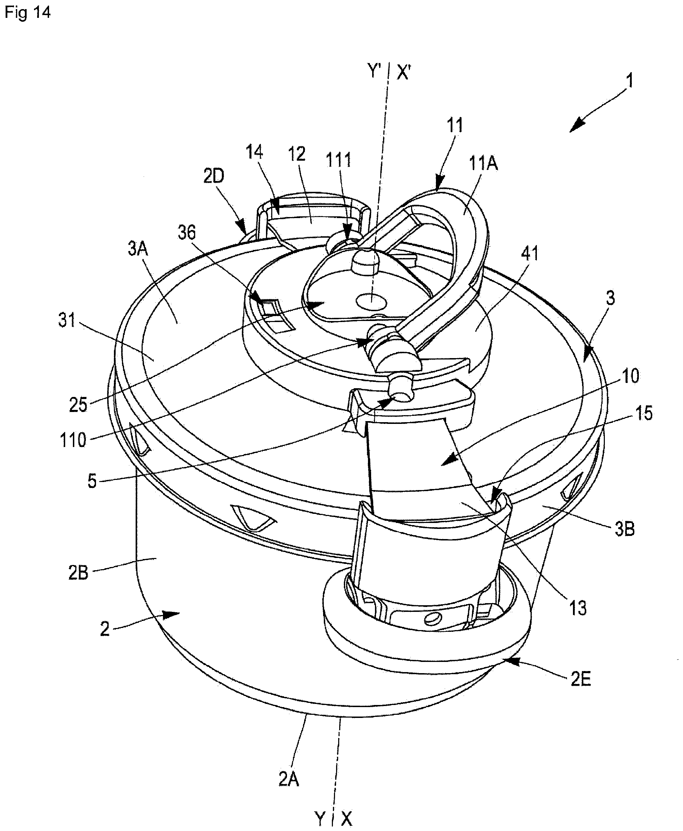

La figure 14 illustre, selon une vue schématique en perspective, l'appareil de cuisson des figures précédentes, lequel est pourvu d'un moyen de sécurité à l'ouverture occupant une position de blocage dans laquelle il empêche le déverrouillage du couvercle, l'organe de commande se trouvant quant à lui dans une position intermédiaire entre ses première et deuxième positions extrémales correspondant respectivement au déverrouillage et au verrouillage du couvercle relativement à la cuve, l'organe de commande étant désaccouplé des conformations motrices sous l'effet d'un débrayage opéré par un dispositif de liaison débrayable assurant la liaison mécanique entre l'organe de commande et la pluralité de conformations motrices que porte ce dernier.
La figure 15 est une vue en coupe du sous-ensemble de couvercle de l'appareil de la figure 14.

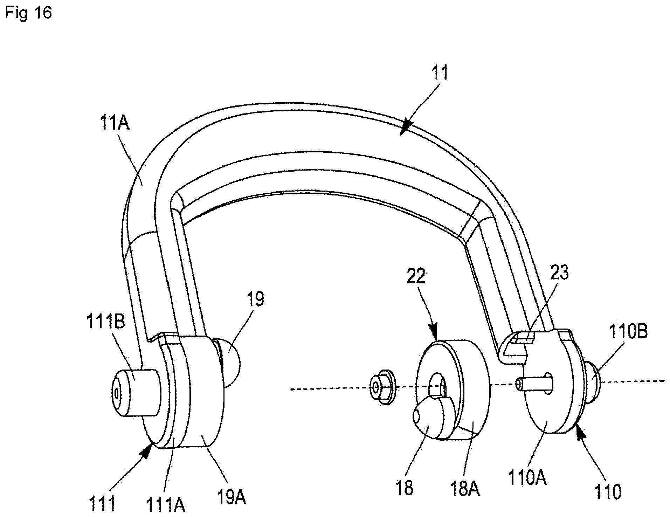

La figure 16 illustre, selon une vue partiellement éclatée, un détail de réalisation de l'organe de commande du verrouillage/déverrouillage de l'appareil de cuisson illustré dans les figures précédentes.

Comme illustré aux figures, l'invention concerne un appareil 1 de cuisson d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve 2 formant récipient de cuisson, destinée à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Avantageusement, et comme illustré aux figures, l'appareil de cuisson 1 comprend au moins une poignée de cuve 2D qui est fixée à ladite cuve 2, de façon à faire saillie extérieurement de cette dernière. Dans le mode de réalisation illustré aux figures, ladite poignée de cuve 2D est montée sur la face externe de la paroi latérale 2B de la cuve 2, de façon à s'étendre radialement vers l'extérieur de la cuve 2 et à former ainsi une prise destinée à être attrapée manuellement par l'utilisateur pour manipuler la cuve 2 (par exemple pour la soulever et la déplacer). Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X', lesdites poignées de cuve 2D, 2E étant en l'espèce disposées à proximité du bord supérieur libre 2C de la cuve 2. Il est toutefois parfaitement envisageable que la cuve 2 ne soit munie que d'une seule poignée de cuve, ou de plus de deux poignées de cuve (par exemple trois ou quatre), sans pour autant que l'on sorte du cadre de l'invention.

L'appareil 1 conforme à l'invention comprend également un couvercle 3 destiné à être associé à la cuve 2 et verrouillé relativement à cette dernière pour former avec elle une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 est de manière classique fabriqué à partir d'un matériau métallique tel que l'acier inoxydable ou l'aluminium. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Le couvercle 3 présente une face interne 30 destinée à se trouver en regard de la cuve 2 et une face externe 31 opposée. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique. Dans le mode de réalisation illustré aux figures, la ceinture annulaire 3B est formée par un bord tombant qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité (non illustré) interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend avantageusement une soupape 4 de régulation de la pression régnant au sein de l'enceinte de cuisson, montée de préférence sur le couvercle 3, de façon par exemple à être portée par ce dernier. Ladite soupape 4 est configurée pour maintenir la pression régnant dans l'enceinte de cuisson à une valeur prédéterminée sensiblement constante, dite pression de fonctionnement, laquelle excède la pression atmosphérique d'une valeur seuil qui est comprise par exemple entre sensiblement 10 et 120 kPa, de préférence de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression peut bien entendu comporter d'autres organes de fonctionnement (par exemple un moyen de sécurité à l'ouverture 5 qui sera décrit plus en détails dans ce qui suit, une soupape de sécurité à la surpression 6, *etc.*)*.*

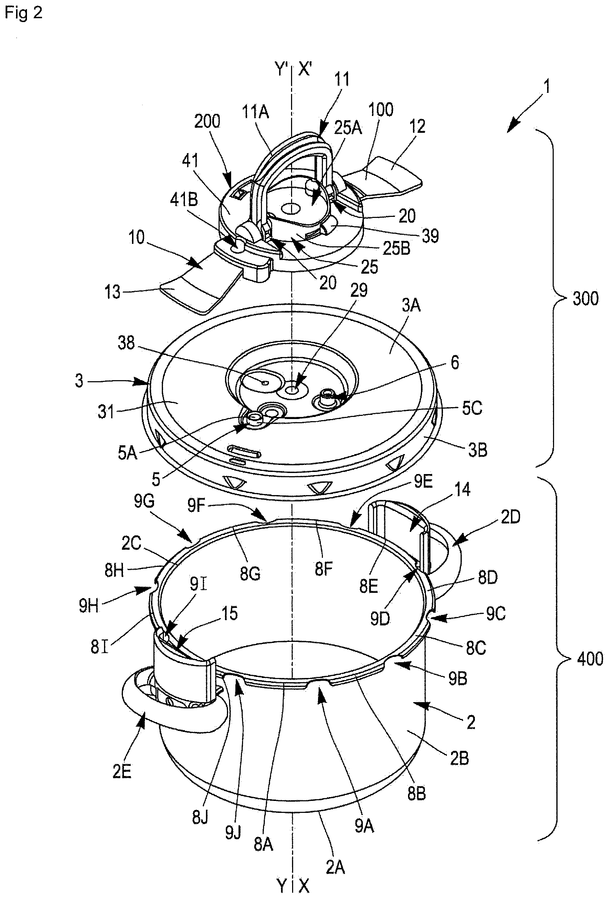

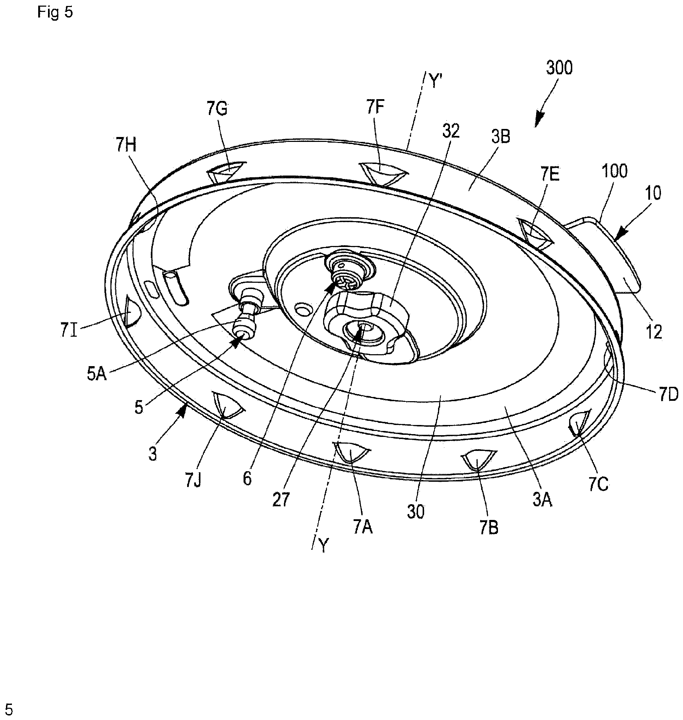

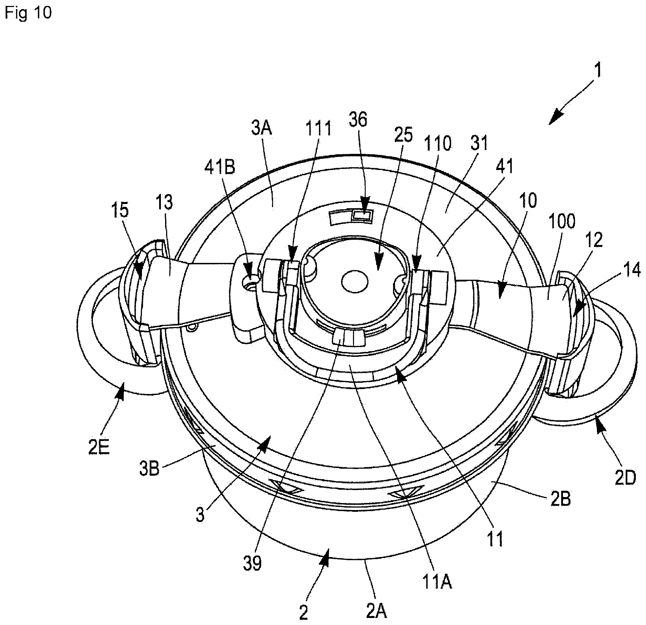

L'appareil 1 conforme à l'invention comporte également un système de verrouillage à baïonnette, afin de permettre à l'enceinte de cuisson formée par l'association du couvercle 3 et de la cuve 2 d'atteindre au moins la pression de fonctionnement susvisée sans risque de voir le couvercle 3 échapper sous l'effet de la pression régnant au sein de l'enceinte. En d'autres termes, le système de verrouillage est conçu pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson. Plus précisément, ledit système de verrouillage à baïonnette est configuré pour assurer le verrouillage et le déverrouillage du couvercle 3 relativement à la cuve 2, par pivotement du couvercle 3 relativement à la cuve 2 selon en l'espèce ledit axe vertical central X-X', pour faire ainsi passer l'appareil 1 d'une configuration d'attente de verrouillage, dans laquelle le couvercle 3 est rapporté sur la cuve 2 et repose librement sur cette dernière (figure 1), à une configuration de verrouillage dans laquelle la cuve 2 et le couvercle 3 interagissent pour empêcher leur libre séparation (figure 10), et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée (par exemple comprise entre 10° et 30°, de préférence comprise entre 10° et 20°, par exemple 15°) autour de l'axe central X-X', dans un premier sens. L'appareil 1 passe inversement de sa configuration de verrouillage à sa configuration d'attente de verrouillage par rotation du couvercle 3 relativement à la cuve 2 selon ladite course angulaire prédéterminée autour de l'axe central X-X' dans un deuxième sens opposé audit premier sens. Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 (cf. figure 5) et de la cuve 2 (cf. figure 2) et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissance de l'une desdites séries est amenée, par rotation du couvercle 3 relativement à la cuve 2, à passer sous une excroissance correspondante de l'autre série pour verrouiller le couvercle 3 relativement la cuve 2. Dans le mode de réalisation illustré aux figures, les excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle 3 fassent saillie vers l'extérieur du couvercle 3 et que les excroissances 8A-8J de cuve fassent alors saillie radialement vers l'intérieur de cette dernière. L'invention n'est donc pas limitée à une configuration particulière des rampes de verrouillage (formées par les excroissances 7A-7J, 8A-8J) du système à baïonnette, l'essentiel étant que les excroissances de couvercle 7A-7J et de cuve 8A-8J, formant respectivement des rampes de couvercle et de cuve, coopèrent ensemble par mise en rotation relative de la cuve 2 et du couvercle 3, en l'espèce selon l'axe vertical central X-X', pour que les rampes de couvercle viennent se positionner sous les rampes de cuve afin de réaliser une liaison mécanique entre la cuve 2 et le couvercle 3 capable de résister à la pression interne régnant dans l'enceinte de cuisson. Dans l'exemple illustré aux figures, chaque excroissance 7A-7J de couvercle est constituée par un élément en volume obtenu par une déformation volumique locale de la matière constitutive de l'enveloppe du couvercle 3, et plus précisément de la ceinture annulaire 3B le long de laquelle sont de préférence disposée, à intervalles réguliers ou non, les excroissances 7A-7J. Chaque excroissance forme ainsi une protubérance, qui vient de matière avec la ceinture annulaire 3B et qui fait saillie de ladite ceinture annulaire en définissant d'un côté une face intérieure convexe et de l'autre côté, en « *négatif* »*,* une face extérieure concave opposée correspondant par exemple à l'empreinte d'application d'un outil de formage, de préférence un outil d'emboutissage. L'invention n'est cependant absolument pas limitée à la mise en oeuvre d'excroissances 7A-7J spécifiques, et en particulier obtenues par emboutissage comme dans l'exemple illustré aux figures. Il est par exemple tout à fait envisageable que les excroissances 7A-7J de couvercle soient formées par des languettes plates obtenues par repliement localisé vers l'intérieur du bord libre de la ceinture annulaire 38 du couvercle 3. Dans l'exemple illustré aux figures, les excroissances 8A-8J de cuve sont quant à elles formées par un rebord annulaire qui déborde vers l'extérieur à partir du bord supérieur libre 2C, des encoches 9A-9J étant ménagées à travers ledit rebord annulaire de façon à permettre le passage desdites excroissances 7A-7J de couvercle, de sorte que les portions dudit rebord annulaire qui s'étendent entre chaque encoche 9A-9J, forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « à *baïonnette* »*.*

Conformément à l'invention, l'appareil 1 comprend également un support 10 attaché audit couvercle 3, de préférence de façon amovible, de façon que ce dernier puisse pivoter relativement audit support 10 selon un premier axe de rotation Y-Y' (qui vient se confondre avec l'axe vertical central X-X' lorsque le couvercle 3 est rapporté sur la cuve 2), entre deux positions correspondant respectivement à une configuration de déverrouillage et une configuration de verrouillage. La liaison pivot entre le couvercle 3 et le support 10 peut être réalisée par tout moyen connu. Les deux positions entre lesquelles le couvercle 3 peut pivoter relativement au support 10 sont séparées par une course angulaire prédéterminée correspondant à celle requise pour faire passer l'appareil 1 de sa configuration de pré-verrouillage (configuration d'attente de verrouillage) illustrée à la figure 1 à sa configuration de verrouillage illustrée par exemple à la figure 10.

De préférence, l'appareil 1 comprend un sous-ensemble de couvercle 300 qui inclut à la fois ledit couvercle 3 et au moins ledit support 10, le sous-ensemble de couvercle 300 en configuration de déverrouillage (c'est-à-dire avec le couvercle 3 se trouvant dans une position, par rapport au support 10, qui correspond à la configuration de déverrouillage) et la cuve 2 étant conçus pour être réunis selon au moins un agencement relatif prédéterminé, qui correspond à la configuration de pré-verrouillage de l'appareil 1 susvisée, permettant audit système de verrouillage à baïonnette de verrouiller le couvercle 3 à la cuve 2 par pivotement du couvercle 3 selon ledit premier axe de rotation Y-Y', afin de faire passer le sous-ensemble de couvercle 300 de la configuration de déverrouillage à la configuration de verrouillage. En d'autres termes, la réunion du sous-ensemble de couvercle 300 en configuration de déverrouillage et de la cuve 2 selon l'agencement relatif prédéterminé (agencement de pré-verrouillage) illustré à la figure 1 entraîne un inter-verrouillage du support 10 et de la cuve 2 qui empêche en l'espèce le support 10 de tourner selon l'axe vertical central X-X' tout en reposant sur la cuve 2. Ce verrouillage de la position angulaire relative du support 10 et de la cuve 2 permet au support 10 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 10).

Avantageusement lesdits support 10 et cuve 2 sont pourvus respectivement de conformations de support 12, 13 et de cuve 14, 15 complémentaires destinées à coopérer, de préférence par emboîtement, lorsque le sous-ensemble de couvercle 300 en configuration de déverrouillage et la cuve 2 sont réunis selon ledit agencement relatif prédéterminé (figure 1). Ledit emboîtement des conformations complémentaires de support 12, 13 et de cuve 14, 15 permet de verrouiller la position angulaire relative du support 10 et de la cuve 2 dans un plan horizontal, c'est-à-dire un plan qui est perpendiculaire audit axe vertical central X-X'.

Dans le mode de réalisation illustré aux figures, la cuve 2 est pourvue de deux conformations de cuve 14, 15 disposées de façon diamétralement opposée relativement à l'axe vertical central X-X'. Ces deux conformations de cuve 14, 15 sont avantageusement formées par des pièces présentant par exemple un profil sensiblement en C, comme visible aux figures. Lesdites pièces en C sont par exemple portées respectivement par les poignées de cuve 2D, 2E, et/ou font partie de ces dernières. Avantageusement, le support 10 comporte quant à lui deux conformations de support 12, 13 de formes respectives complémentaires de celles des conformations de cuve 14, 15. Les deux conformations de support 12, 13 sont disposées avantageusement de façon diamétralement opposée sur le couvercle 3 relativement au premier axe de rotation Y-Y', lesdites conformations de support 12, 13 débordant avantageusement radialement du couvercle 3 pour venir coopérer avec les conformations de cuve complémentaires 14, 15. Il est cependant parfaitement envisageable, sans pour autant que l'on sorte du cadre de l'invention, que lesdits support 10 et cuve 2 soient pourvus respectivement d'une seule conformation de support et d'une seule conformation de cuve, ou même que les support 10 et cuve 2 soient pourvus, au lieu de conformations respectives de support et de cuve destinées à coopérer par emboîtement, d'éléments d'interverrouillage d'une autre nature reposant sur la mise en oeuvre d'un autre type de coopération (friction, clipsage, attraction magnétique...) pour verrouiller la position angulaire relative du support 10 et de la cuve 2. Avantageusement, chaque conformation de cuve 14, 15 forme un élément femelle, tandis que chaque conformation de support 12, 13 forme un élément mâle complémentaire dudit élément femelle, ledit élément mâle étant avantageusement destiné à être inséré dans l'élément femelle pour établir une liaison de blocage en rotation selon l'axe vertical central X-X' entre le support 10 et la cuve 2.

Avantageusement, le support 10 comprend une traverse 100 qui s'étend, de préférence sur le couvercle 3 (en étant relié à ce dernier par une liaison pivot), longitudinalement entre deux extrémités opposées qui sont de préférence des extrémités libres. La traverse 100 est avantageusement formée par une pièce sensiblement allongée qui s'étend diamétralement sur le couvercle 3. Lesdites extrémités opposées de la traverse 100 formant le support 10 débordent radialement du couvercle 2, comme illustré aux figures, pour former lesdites conformations de support 12, 13, lesquelles sont configurées pour coopérer respectivement avec des logements complémentaires formant lesdites conformations de cuve 14, 15. Par exemple, la traverse 100 se présente sous la forme d'une bande métallique rigide d'un seul tenant qui forme à ses extrémités libres des ailettes constituant les conformations de support 12, 13 complémentaires des logements 14, 15 délimités par les pièces en C solidaires de la cuve 2.

Le sous-ensemble de couvercle 300 forme ainsi un élément unitaire indépendant destiné à être associé avec un sous-ensemble de cuve 400 (formé par la cuve 2 elle-même et au moins les poignées de cuve 2D, 2E ainsi que les conformations de cuve 14, 15 avantageusement portées par ces dernières), pour former l'enceinte de cuisson. En d'autres termes, lorsque le sous-ensemble de couvercle 300 est en configuration de déverrouillage, le couvercle 3 et le support 10 sont positionnés l'un relativement à l'autre de telle manière que l'accostage du support 10 sur la cuve 2 selon une position prédéterminée, correspondant audit agencement relatif prédéterminé, permet de faire passer les rampes de couvercle 7A-7J en deçà des rampes de cuve 8A-8J par les encoches 9A-9J séparant lesdites rampes de cuve, le sous-ensemble de couvercle 300 coiffant alors la cuve 2 dans une position d'attente. Il suffira alors, à partir de cette position d'attente, de faire pivoter le couvercle 3 relativement à la cuve 2 pour verrouiller le couvercle 3 relativement à la cuve 2. En d'autres termes, une fois la cuve 2 et le sous-ensemble de couvercle 300 en configuration de déverrouillage réunis selon l'agencement relatif prédéterminé de pré-verrouillage illustré à la figure 1, il suffit de maintenir le support 10 en position relativement à la cuve 2 et de faire pivoter le couvercle 3 relativement au support 10 selon la course angulaire prédéterminée susvisée afin d'amener les rampes de couvercle 7A-7J en correspondance avec les rampes de cuve 8A-8J, sous ces dernières, verrouillant ainsi le couvercle 3 relativement à la cuve 2.

Conformément à l'invention, l'appareil de cuisson 1 comprend un organe de commande 11 du verrouillage/déverrouillage qui est actionnable manuellement, c'est-à-dire qu'il est configuré pour être manipulé directement par l'utilisateur de façon à permettre à ce dernier de contrôler le système de verrouillage à baïonnette afin de pouvoir avantageusement passer, par actionnement manuel de l'organe de commande 11, de la configuration de déverrouillage à la configuration de verrouillage et *vice-versa.* L'organe de commande 11 permet ainsi avantageusement de commander le passage de l'appareil 1 de sa configuration de pré-verrouillage (figure 1) à sa configuration de verrouillage (figure 10), et inversement. L'organe de commande 11 est attaché au support 10, de façon permanente (comme illustré aux figures) ou amovible, par une liaison mécanique autorisant le déplacement manuel de l'organe de commande 11 relativement au support 10 entre une première position et une deuxième position correspondant respectivement au déverrouillage (figure 1) et au verrouillage (figure 10) du couvercle 3 relativement à la cuve 2. En d'autres termes, l'organe de commande 11 est avantageusement fixé au support 10, de manière amovible ou permanente, tout en conservant une faculté de mobilité relativement à ce dernier, de sorte qu'un utilisateur peut entraîner manuellement en déplacement l'organe de commande 11 relativement au support 10 de la première position à la deuxième position et inversement. L'organe de commande 11 est par ailleurs connecté au couvercle 3 par un dispositif de transformation dudit déplacement manuel de l'organe de commande 11 en pivotement du couvercle 3 relativement au support 10. L'utilisateur peut ainsi commander le passage de la configuration de déverrouillage à la configuration de verrouillage, et *vice-versa,* par déplacement manuel de l'organe de commande 11 relativement au support 10 entre ses première et deuxième positions, et inversement. Le dispositif de transformation est donc configuré pour convertir le mouvement de l'organe de commande 11 relativement au support 10 en mouvement rotatif du couvercle 3 relativement à ce même support 10, en l'espèce selon le premier axe Y-Y', de sorte que l'utilisateur peut ainsi commander le verrouillage/déverrouillage par pivotement du couvercle 3 relativement au support 10 par simple manipulation de l'organe de commande 11, une fois le couvercle 3 rapporté sur la cuve 2 avec les rampes de couvercle 7A-7J disposées en deçà des rampes de cuves 8A-8J. Grâce à l'interaction entre le support 10 et la cuve 2, réalisée avantageusement au moyen de la coopération des conformations de support 12, 13 et de cuve 14, 15, le support 10 est empêché de pivoter relativement à la cuve 2, en l'espèce selon ledit axe vertical central X-X', lorsque l'organe de commande 11 est déplacé entre ses première et deuxième positions (ou inversement).

Conformément à l'invention, le dispositif de transformation comprend d'une part au moins une pluralité de conformations réceptrices 16, 17 fixées au couvercle 3 et disposées à distance les unes des autres, et d'autre part au moins une pluralité de conformations motrices 18, 19 distantes les unes des autres et toutes portées par l'organe de commande 11 en différents emplacements de ce dernier. En d'autres termes, les conformations réceptrices 16, 17 sont au moins au nombre de deux, et sont chacune attachées au couvercle 3, en des emplacements de ce dernier distants les uns des autres, de façon à pouvoir transmettre audit couvercle 3 un effort de mise en rotation selon le premier axe Y-Y'. Les conformations motrices 18, 19 sont elles aussi au moins au nombre de deux et sont elles aussi disposées à distance les unes des autres, tout en étant embarquées par l'organe de commande 11. Cela signifie que les conformations motrices 18, 19 se déplacent toutes en même temps que, et avec, l'organe de commande 11, c'est-à-dire qu'elles suivent une trajectoire impartie par le déplacement manuel de l'organe de commande 11, et qui est analogue à la trajectoire suivie par l'organe de commande 11 lui-même (par exemple une rotation selon une course angulaire donnée). Selon un premier mode de réalisation, la pluralité de conformations motrices 18, 19 vient de matière avec l'organe de commande 11 et forme avec ce dernier une seule et même pièce monobloc d'un seul tenant, sans possibilité de déplacement relatif entre l'organe de commande 11 et chacune des conformations motrices 18, 19. Selon un autre mode de réalisation, qui correspond à celui illustré aux figures, l'appareil 1 comprend un dispositif de liaison débrayable 42 assurant une liaison mécanique débrayable entre l'organe de commande 11 et la pluralité de conformations motrices 18, 19, pour permettre, dans certaines situations anormales, une possibilité de déplacement relatif entre l'organe de commande 11 et les conformations motrices 18, 19 portées par ce dernier. Le dispositif de liaison débrayable 42 sera décrit plus en détail dans ce qui suit.

Conformément à l'invention, les conformations motrices 18, 19 engagent respectivement les conformations réceptrices 16, 17 de façon simultanée pour exercer sur elles, en réponse au déplacement de l'organe de commande 11 (sous l'effet d'un actionnement manuel de l'utilisateur), une pluralité de forces respectives contribuant à réaliser un couple d'entraînement du couvercle 3 en rotation, en l'espèce selon le premier axe Y-Y', relativement au support 10. Lesdites forces s'exercent de préférence selon des directions et/ou sens respectifs différents afin de générer un couple d'entraînement en rotation. En d'autres termes, l'organe de commande 11 est configuré pour appliquer, de préférence directement, au couvercle 3 une pluralité d'efforts simultanés en différents points du couvercle 3, ou en différents points d'une ou plusieurs pièces elle-même(s) solidaire(s) du couvercle 3 (la ou lesdites pièce(s) étant de préférence attachée(s) au couvercle 3 sans faculté de mobilité par rapport à ce dernier), la pluralité d'efforts réalisant un couple qui s'applique directement ou indirectement au couvercle 3 pour entraîner ce dernier en rotation par rapport au support 10 selon le premier axe Y-Y'. Grâce à cette mesure technique, le couvercle 3 reste en permanence centré relativement à la cuve 2, ou à tout le moins n'a pas tendance à se décentrer intempestivement, lorsque le couvercle 3 est mis en rotation relativement au support 10 sous l'effet de l'actionnement manuel de l'organe de commande 11 dans le sens du verrouillage ou du déverrouillage. Grâce à cet effet d'anti-décentrage, les frottements intempestifs entre le couvercle 3, la garniture d'étanchéité (joint annulaire en matériau élastomère par exemple) et la cuve 2 sont réduits. Cela permet de faciliter le verrouillage/déverrouillage. Une mise en rotation plus douce, progressive et continue du couvercle 3 relativement au support 10 résulte également de cette mesure technique consistant à réaliser un couple d'entraînement en appliquant simultanément différentes forces en différents emplacements du couvercle 3 ou d'une ou plusieurs pièce(s) attachée(s) de façon fixe à ce dernier.

Avantageusement, lesdites conformations réceptrices 16, 17 sont disposées à équidistance du premier axe de rotation Y-Y', de façon à bénéficier d'un effet de symétrie qui favorise l'anti-décentrage du couvercle 3 relativement à la cuve 2. De façon préférentielle, ladite pluralité de conformations réceptrices 16, 17 inclut au moins, et de préférence uniquement, une première conformation réceptrice 16 et une deuxième conformation réceptrice 17 disposées à l'opposé l'une de l'autre relativement audit premier axe de rotation Y-Y'. En d'autres termes, dans ce mode de réalisation préférentiel, la pluralité de conformations réceptrices inclut seulement une première et une deuxième conformation réceptrice 16, 17 disposées de manière diamétralement opposée relativement au premier axe de rotation Y-Y'. Ce mode de réalisation permet de générer une mise en rotation du couvercle 3 relativement au support 10 au travers d'un couple de forces appliqué de manière symétrique dont la résultante est nulle, mais dont le moment résultant n'est pas nul et génère un couple qui fait tourner le couvercle 3 par rapport au support 10. Dans ce mode de réalisation, la mise en rotation du couvercle 3 est particulièrement douce, progressive et continue grâce à l'équilibre permanent procuré par les deux forces d'entraînement qui s'appliquent au niveau des deux conformations réceptrices 16, 17 diamétralement opposées.

Avantageusement, l'une de ladite pluralité de conformations réceptrices 16, 17 et de ladite pluralité de conformations motrices 18, 19 forme une pluralité de conformations femelles, tandis que l'autre de ladite pluralité de conformations réceptrices 16, 17 et de ladite pluralité de conformations motrices 18, 19 forme une pluralité de conformations mâles logées respectivement dans lesdites conformations femelles. Dans l'exemple illustré aux figures, les conformations mâles sont formées par les conformations motrices 18, 19, tandis que les conformations femelles complémentaires dans lesquelles viennent se loger les conformations mâles sont formées par les conformations réceptrices 16, 17. Une configuration inverse est cependant parfaitement envisageable sans pour autant que l'on sorte du cadre de l'invention.

Avantageusement, chaque conformation mâle peut coulisser dans la conformation femelle au sein de laquelle elle est respectivement logée, selon une direction de coulissement sensiblement parallèle audit premier axe de rotation Y-Y', c'est-à-dire une direction de coulissement avantageusement verticale. Dans ce mode de réalisation préférentiel, chaque conformation femelle se présente par exemple sous la forme d'une cavité ou d'une lumière oblongue qui assure un guidage longitudinal de la conformation mâle qui y est insérée, tout en autorisant ladite conformation mâle à pivoter sur elle-même. Un tel agencement s'avère extrêmement simple et fiable, et permet de mettre en oeuvre un organe de commande 11 monté à pivotement selon un deuxième axe différent du premier axe de rotation Y-Y'.

Selon le mode de réalisation préférentiel illustré aux figures, l'organe de commande 11 est avantageusement monté à pivotement relativement au support 10 selon un deuxième axe de rotation Z-Z'. De préférence, afin de favoriser l'ergonomie de commande, le deuxième axe de rotation Z-Z' est parallèle à une direction sécante audit premier axe de rotation Y-Y', et de préférence est perpendiculaire audit premier axe de rotation Z-Z', comme illustré aux figures. La mise en oeuvre d'un organe de commande 11 qui pivote relativement au support 10 selon un deuxième axe de rotation Z-Z' perpendiculaire au premier axe de rotation Y-Y' du couvercle 3 présente certes un caractère avantageux sur le plan ergonomique, mais peut entraîner des efforts parasites tendant à décentrer le couvercle 3 relativement à la cuve 2. Grâce toutefois à l'invention, et plus précisément à l'exercice simultané d'une pluralité de forces par l'organe de commande 11 de façon à créer un couple directement transmis au couvercle 3, cet effet défavorable de décentrage est inhibé ou à tout le moins réduit. Avantageusement, l'organe de commande 11 est monté à pivotement relativement au support 10 entre d'une part une position déployée (première position précitée) correspondant à la configuration de déverrouillage et dans laquelle ledit organe de commande 11 fait saillie verticalement, en l'espèce au droit du couvercle 3 vers l'extérieur, et d'autre part une position rétractée (deuxième position précitée) qui correspond à la configuration de verrouillage et dans laquelle ledit organe de commande 11 est rabaissé vers le couvercle 3. De préférence, dans sa position déployée, l'organe de commande 11 s'étend selon une direction moyenne sensiblement parallèle audit axe vertical central X-X' (ainsi qu'au premier axe Y-Y') tandis qu'en position rétractée, il s'étend avantageusement selon une direction moyenne sensiblement perpendiculaire audit axe vertical central X-X', comme illustré aux figures. Dans ce mode de réalisation préférentiel, l'organe de commande 11 présente ainsi un caractère escamotable lui permettant de s'effacer lorsqu'il se retrouve dans sa position rétractée.

Avantageusement, lesdites conformations motrices comprennent au moins une première conformation motrice 18 et une deuxième conformation motrice 19 qui ne sont pas alignées avec le deuxième axe de rotation Z-Z', de façon à se déplacer chacune selon une trajectoire circulaire autour et à distance dudit deuxième axe de rotation Z-Z' lors de la rotation de l'organe de commande 11 selon le deuxième axe de rotation Z-Z'. En d'autres termes, dans ce mode de réalisation préférentiel illustré aux figures, chaque conformation motrice 18, 19 est excentrée par rapport au deuxième axe de rotation Z-Z' de sorte à suivre une trajectoire en arc de cercle autour du deuxième axe de rotation Z-Z' pour pouvoir ainsi exercer sur la conformation réceptrice 16, 17 correspondante une force avec une composante horizontale, c'est-à-dire qui s'inscrit dans un plan perpendiculaire au premier axe de rotation Y-Y'.

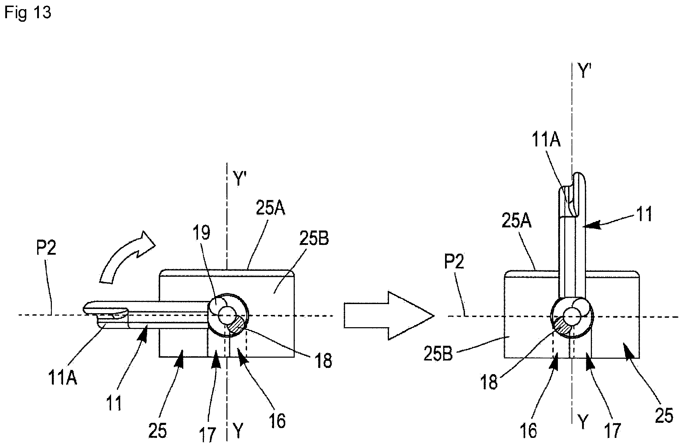

Avantageusement, les projections orthogonales desdites première et deuxième conformations motrices 18, 19 sur un premier plan P1 perpendiculaire audit deuxième axe de rotation Z-Z' et dans lequel s'inscrit le premier axe de rotation Y-Y' sont respectivement disposées de part et d'autre de la projection orthogonale dudit deuxième axe de rotation Z-Z' sur ce même premier plan P1. Avantageusement, les projections orthogonales desdites première et deuxième conformations motrices 18, 19 sur un deuxième plan P2 perpendiculaire audit premier axe de rotation Y-Y' et dans lequel s'inscrit le deuxième axe de rotation Z-Z' sont respectivement disposées au moins en partie de part et d'autre de la projection orthogonale dudit premier axe de rotation Y-Y' sur ce même deuxième plan P2, qui est avantageusement perpendiculaire au premier plan P1. Dans cette configuration spécifique, qui correspond au mode de réalisation illustré aux figures, les deux conformations motrices 18, 19 sont avantageusement disposées en opposition à la fois par rapport au plan médian vertical P1 et au plan médian horizontal P2. Grâce à cette double opposition verticale et horizontale et à l'excentrage des conformations motrices 18, 19 relativement au deuxième axe de rotation Z-Z', les première et deuxième conformations motrices 18, 19 sont soumises, lors du déplacement manuel de l'organe de commande 11 qui les porte, à des déplacements respectifs d'amplitude angulaire identique mais de sens opposés. Par exemple, le déplacement de l'organe de commande 11 de sa position rétractée de verrouillage à sa position déployée de déverrouillage (comme illustré à la figure 13), selon par exemple une course angulaire de 90°, va entraîner le déplacement de la première conformation motrice 18 selon un premier arc de cercle, sous le plan P2, dans un premier sens, et simultanément le déplacement de la deuxième conformation motrice 19, selon un deuxième arc de cercle symétrique audit premier arc de cercle par rapport au plan P2 et au-dessus de ce dernier, dans un deuxième sens opposé au premier sens. Le déplacement de chacune des première et deuxième conformations motrices 18, 19, sous l'effet du déplacement de l'organe de commande 11, s'effectue alors que chaque conformation motrice 18, 19 est capturée dans un logement correspondant 16, 17 formant respectivement les première et deuxième conformations réceptrices. Cela permet d'appliquer sur les parois des logements en question des forces de mêmes intensités, dont la résultante est nulle, mais dont le moment total n'est pas nul, de façon à générer un couple d'entraînement sur le couvercle auquel sont attachés, directement ou indirectement, chacun des logements oblongs formant avantageusement les conformations réceptrices 16, 17.

Avantageusement, et comme illustré aux figures, l'organe de commande 11 comprend une anse 11A, qui se présente donc sous la forme d'une pièce arquée, en forme de boucle ou d'arche, configurée pour pouvoir être saisie fermement, de préférence à pleine main ou à tout le moins entre le pouce et plusieurs doigts, par un utilisateur. L'invention n'est bien entendu pas limitée à la mise en oeuvre d'une anse pour former l'organe de commande 11, et ce dernier peut par exemple être constitué alternativement par un levier sensiblement rectiligne, ou avec un profil en forme de T, de L, une forme de pommeau, de bouton évasé, etc. Ladite anse 11A s'étend entre deux extrémités 110, 111 traversées par ledit deuxième axe de rotation Z-Z'. En d'autres termes, l'anse 11A présente avantageusement une forme sensiblement en U ou en C et est articulée relativement au support 10 au niveau desdites extrémités 110, 111.

De préférence, lesdites deux extrémités 110, 111 portent chacune une conformation motrice 18, 19 de ladite pluralité de conformations motrices. Par exemple, comme illustré aux figures, chaque extrémité 110, 111 de l'anse 11A forme avantageusement un oreillon respectif 110A, 111A, lequel porte par exemple un tourillon respectif 110B, 111B qui coopère avec un palier respectif 21A, 21B pour le montage de l'anse 11A à rotation selon le deuxième axe de rotation Z-Z'. Les paliers 21A, 21B sont eux-mêmes avantageusement fixés au support 10 par tous moyens appropriés (vissage ou autre). Comme illustré aux figures, chaque oreillon 110A, 111A présente avantageusement une face interne disposée vers l'intérieur de l'anse, en regard de la face interne de l'autre oreillon, et une face externe opposée, à partir de laquelle le tourillon 110B, 111B correspondant s'étend, vers l'extérieur, coaxialement au deuxième axe de rotation Z-Z'.

Selon un mode de réalisation non illustré, les conformations motrices 18, 19 viennent de matière avec l'oreillon respectif 110A, 111A qui les porte, en faisant saillie vers l'intérieur de la face intérieure de chaque oreillon 110A, 111A en question.

Dans le mode de réalisation préférentiel illustré aux figures, chaque conformation motrice 18, 19 est portée par une pièce intermédiaire respective 18A, 19A montée à rotation, selon le deuxième axe Z-Z', sur l'oreillon correspondant 110A, 111A. La faculté de rotation de chaque pièce intermédiaire 18A, 19A relativement à l'oreillon respectif 110A, 111A qui la porte est avantageusement inhibée par un verrou. Ce dernier est par exemple formé par une cavité 22 ménagée à la surface de chaque pièce intermédiaire 18A, 19A pour former une gâche, et un pêne 23, 24 correspondant monté à coulissement élastique dans chaque branche de l'anse 11A, au sein d'un logement respectif 23A, 24A formé par une cavité qui débouche au niveau de l'oreillon 110A, 111A respectif. Ce verrou réversible fait avantageusement partie du dispositif de liaison débrayable 42 susvisée. Il permet une fonction de débrayage qui sera exposée plus en détail dans ce qui suit.

Avantageusement, le dispositif de transformation du déplacement manuel de l'organe de commande 11 en pivotement du couvercle 3 comprend un moyeu 25 attaché au couvercle 3 coaxialement audit premier axe de rotation Y-Y'. Conformément au mode de réalisation illustré aux figures, ledit moyeu 25 porte ladite pluralité de conformations réceptrices 16, 17. Comme illustré, ledit moyeu 25 forme, de préférence à sa périphérie, ladite pluralité de conformations réceptrices 16, 17. Les conformations réceptrices 16, 17 sont donc embarquées avantageusement par le moyeu 25 et forment avec ce dernier une seule et même pièce d'un seul tenant. Le moyeu 25 est fixé directement ou indirectement au couvercle 3, de préférence sans faculté de mobilité en rotation entre le couvercle 3 et le moyeu 25 de façon que tout effort d'entraînement en rotation du moyeu 25 selon le premier axe Y-Y' soit directement transmis au couvercle 3. Avantageusement, le moyeu 25 forme un capot qui contribue à délimiter un logement accueillant ladite soupape 4 de régulation. À cette fin, le moyeu 25 présente par exemple une forme de cloche avec une paroi supérieure 25A et une paroi latérale annulaire 25B, à la surface de laquelle sont ménagées deux cavités allongées qui s'étendent verticalement et forment les conformations réceptrices 16, 17. La soupape 4 de régulation de la pression régnant au sein de l'enceinte est avantageusement disposée au moins en partie sous le capot 25, ce qui permet de la dissimuler tout en la disposant à proximité immédiate du centre du couvercle 3, c'est-à-dire en un emplacement où la course en rotation relativement au support 10 est minimale, ce qui s'avère avantageux pour l'implantation d'éléments fonctionnels complémentaires susceptibles de coopérer par exemple avec la soupape 4 et d'être à cette fin disposés par exemple sur la paroi supérieure 25A. Avantageusement, l'appareil 1 comprend également une platine 26 disposée sur le couvercle 3 et sous le moyeu 25, de préférence pour contribuer à former avec ce dernier ledit logement accueillant ladite soupape 4 de régulation. La platine 26 est avantageusement fixée à la fois au moyeu 25 et au couvercle 3, pour transmettre au couvercle 3 les efforts de rotation selon le premier axe Y-Y' communiqués au moyeu 25 par l'intermédiaire de la coopération entre les conformations motrices 18, 19 et les conformations réceptrices 16, 17 portées par le moyeu 25. La soupape 4 de régulation est ainsi avantageusement portée par la platine 26 tout en étant coiffée au moins en partie par le moyeu 25.

Avantageusement, la traverse 100 qui forme de préférence le support 10 est disposée entre la platine 26 et le moyeu 25, de sorte que la traverse 100 d'une part et le sous-ensemble formé par la platine 26 et le moyeu 25 d'autre part présentent une faculté de rotation relative selon le premier axe de rotation Y-Y'. Le moyeu 25 est de préférence fixé à la platine 26, par exemple par vissage, emboîtement élastique, ou tout autre moyen, avec la traverse 100 interposée et capturée entre le moyeu 25 et la platine 26. Lesdits moyeu 25 et platine 26 forment ainsi un premier sous-ensemble unitaire, tandis que lesdits organes de commande 11 et traverse 100 forment un deuxième sous-ensemble unitaire, lesdits premier et deuxième sous-ensembles unitaires étant assemblés l'un à l'autre avec une faculté de pivotement relative selon le premier axe Y-Y'.

Avantageusement, la soupape 4 de régulation fait partie du premier sous-ensemble unitaire, puisqu'elle est embarquée de préférence par la platine 26. Par exemple, la platine 26 se présente sous la forme d'une coupelle, de préférence en matière plastique, pourvue d'un orifice 26A coaxial à l'orifice central 29 ménagé à travers le couvercle 3. La coupelle 26 présente avantageusement une face inférieure 260 destinée à venir en regard de la face externe 31 du couvercle 3, et une face supérieure 261 opposée. Un orifice de soupape est ménagé à travers la coupelle entre les faces inférieure 260 et supérieure 261 de cette dernière. Cet orifice est entouré, sur la face inférieure 260, par un joint d'étanchéité 33 et il débouche, du côté de la face supérieure 261, dans une chambre 34 qui elle-même communique d'une part avec un puits 35 et d'autre part avec un conduit d'échappement 36.

Le puits 35 accueille un dispositif de soupape à poids ou à ressort, équipé par exemple d'un clapet mobile 37 monté mobile à coulissement selon une direction parallèle au premier axe de rotation Y-Y', ledit clapet 37 étant rappelé (sous l'effet de la gravité ou d'une force exercée par un corps élastique, du genre ressort) dans une position basse. Le clapet 37 passe à travers l'orifice ménagé dans la coupelle formant la platine 26 pour venir obturer un orifice de fuite 38 ménagé à travers le couvercle 3 et qui communique de manière étanche, grâce à la garniture d'étanchéité 33, avec la chambre 34. Le clapet 37 est ainsi sensible à la pression régnant dans l'enceinte de cuisson et vient alternativement obturer ou libérer l'orifice de fuite 38 pour réguler le niveau de pression régnant dans l'enceinte. Lorsque le niveau de pression régnant dans l'enceinte excède la pression de fonctionnement prédéterminé, le clapet 37 se soulève ce qui permet à la vapeur contenue dans l'enceinte de cuisson de gagner tout d'abord la chambre 34 puis de s'échapper par le conduit d'échappement 36 vers l'extérieur. Avantageusement, l'appareil 1 comprend en outre un dispositif de tarage de la soupape 4 de régulation de pression, qui permet de régler le niveau de la pression de fonctionnement auquel la soupape 4 se déclenche, c'est-à-dire le seuil de pression à partir duquel le clapet 37 est repoussé hors de sa position de rappel pour libérer l'orifice de fuite 38. Le dispositif de tarage, qui peut être de tout type connu (et agit par exemple sur la compression du ressort de rappel du clapet 37), est avantageusement relié à un dispositif de commande manuelle 39. Ce dernier se présente par exemple sous la forme d'une patte montée à pivotement selon le premier axe de rotation Y-Y' et s'étendant entre deux extrémités dont l'une est reliée à la soupape 4 pour agir sur le tarage de cette dernière et l'autre à un curseur, bouton ou levier actionnable manuellement. Ladite patte traverse par exemple la paroi latérale 25B du moyeu 25, en passant à travers une fente 250 ménagée à travers ladite paroi latérale 25B. Bien entendu, le recours à une soupape 4 dont le tarage est réglable est tout à fait facultatif et il est parfaitement envisageable de recourir à une soupape 4 de régulation dont le tarage ne peut pas être modifié par l'utilisateur.

Avantageusement, ledit premier sous-ensemble unitaire comprenant également une tige d'assemblage 27 qui fait saillie de la platine, de préférence vers le bas et coaxialement au premier axe de rotation Y-Y'. Ladite tige d'assemblage 27 présente une portion interne 27A disposée au sein dudit premier sous-ensemble unitaire et passant à travers un orifice 28 ménagé à travers ladite traverse 100 pour que ledit deuxième sous-ensemble unitaire pivote autour de ladite portion interne 27A selon ledit premier axe de rotation Y-Y'. La tige 27 présente également une portion libre filetée 27B passant à travers un orifice central 29 de fixation ménagé à travers le couvercle 3, de préférence au centre de ce dernier, ladite portion libre filetée 27B coopérant avec un écrou 32 pour fixer ledit premier sous-ensemble unitaire au couvercle 3. Avantageusement, ladite tige d'assemblage 27 comprend une tête évasée, tandis que le moyeu 25 comprend un tube 25C qui s'étend sensiblement coaxialement au premier axe de rotation Y-Y' et qui traverse l'orifice 28 ménagé à travers le support 10 et l'orifice 26A ménagé à travers la platine 26 pour venir en appui contre la face externe 31 du couvercle 3, coaxialement à l'orifice 29 ménagé à travers le couvercle 3. La tige 27 est avantageusement enfilée dans le tube 25C en question, lequel présente une restriction de section formant un épaulement contre lequel la tête de la tige 27 est destinée à venir en appui. La portion interne 27A est ainsi disposée du côté de la face externe 31 du couvercle 3, tandis que la portion libre filetée 27B est destinée à passer à travers l'orifice central 29 ménagé à travers le couvercle 3, pour venir coopérer avec l'écrou 32. Un joint torique 40, ou tout autre système d'étanchéité, est enfilé sur la tige 27 pour assurer une étanchéité lorsque le premier sous-ensemble unitaire est fixé sur le couvercle 3. De préférence, afin d'immobiliser ledit premier sous-ensemble unitaire en rotation selon le premier axe de rotation Y-Y' par rapport au couvercle 3, la platine 26 est pourvu d'un pion 43 disposé à distance du premier axe de rotation Y-Y' et qui fait saillie vers le bas de la face inférieure 260 de la platine 26. Le pion 43 est destiné à être inséré dans un orifice de blocage 44 correspondant ménagé à travers le couvercle 3, et dont les dimensions sont conjuguées à celles du pion 43. Grâce à cette coopération du pion 43 et de l'orifice de blocage 44, les efforts de rotation selon le premier axe Y-Y' exercées sur la platine 26, par l'intermédiaire du moyeu 25 auquel elle est fixée, sont communiquées au couvercle 3. Un joint torique (non illustré), ou tout autre système d'étanchéité, est avantageusement agencé autour du pion 43, pour empêcher toute communication intempestive de l'intérieur de l'enceinte avec l'extérieur par l'orifice de blocage 44.

Le deuxième sous-ensemble unitaire comprend également quant à lui avantageusement une couronne 41 qui forme un capot supérieur annulaire avec un orifice central 41A. La couronne 41 vient coiffer la platine 26, la traverse 100, les paliers 21A, 21B et les tourillons 110B, 111B, tout en laissant émerger par son orifice 41A le moyeu 25.

Lesdits premier et deuxième sous-ensembles unitaires sont avantageusement assemblés entre eux et forment ainsi un module unitaire de commande 200 fixé de façon amovible au couvercle 3, en l'espèce au moyen desdites tiges d'assemblage 27 et écrou 32.

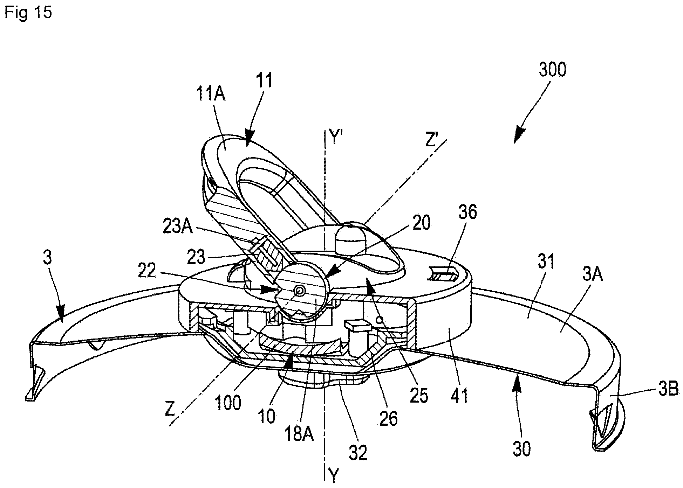

Avantageusement, le moyen de sécurité à l'ouverture 5 évoqué précédemment est sensible à la pression régnant dans l'enceinte de cuisson. Il est ainsi susceptible d'évoluer, sous l'effet du niveau de pression régnant dans l'enceinte de cuisson, entre différentes positions. En particulier, le moyen de sécurité à l'ouverture 5 est susceptible d'occuper une position de blocage (cf. figures 14 et 15) dans laquelle il empêche le déverrouillage du couvercle 3 lorsqu'il règne dans l'enceinte de cuisson une pression sensiblement supérieure à la pression atmosphérique, ou à tout le moins supérieure à un niveau de pression prédéterminé supérieur à la pression atmosphérique.

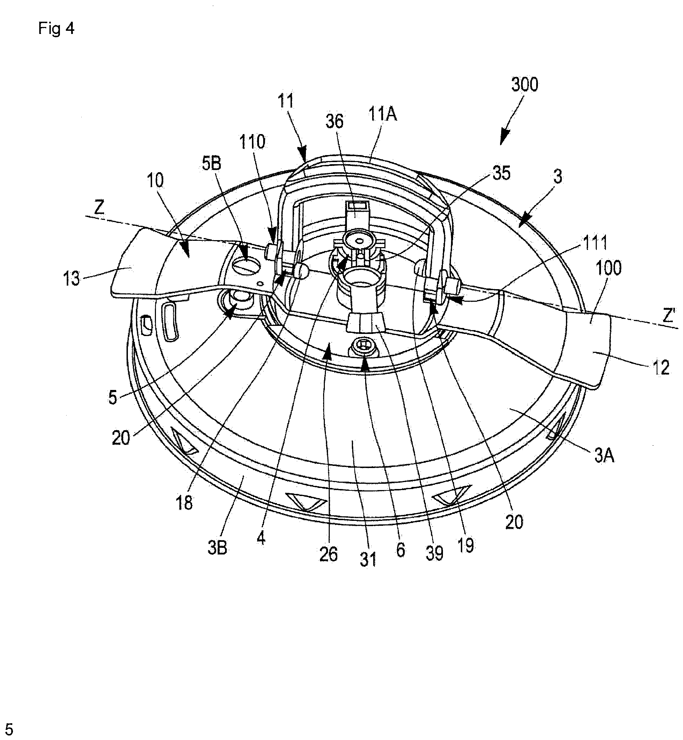

Le moyen de sécurité à l'ouverture 5 comprend par exemple un élément mobile 5A monté à coulissement sur le couvercle 3, et en l'espèce à coulissement vertical selon une direction de coulissement parallèle à l'axe vertical central X-X', entre une position haute (de butée) dans laquelle il est capable de coopérer avec une conformation complémentaire de blocage 5B (en l'espèce un orifice) portée par le support 10, afin de bloquer le pivotement du couvercle 3 relativement au support 10, et une position basse (de rappel et de butée) dans laquelle il n'interfère pas avec la conformation complémentaire de blocage 5B, autorisant ainsi le pivotement libre du couvercle 3 relativement au support 10. Comme illustré aux figures, l'élément mobile 5A est formé avantageusement par un doigt destiné à coulisser verticalement au sein d'un tube 5C abouché à un orifice de fuite 5D ménagé à travers le couvercle 3. En position haute, le doigt vient obturer hermétiquement l'orifice de fuite 5D en question, alors qu'en position basse la vapeur est autorisée à fuir par ledit orifice 5D. Une fenêtre de visualisation 41B est par ailleurs ménagée à travers la couronne 41, de façon à permettre à l'utilisateur de voir le doigt 5A lorsque ce dernier se trouve en position haute, indiquant l'existence au sein de l'appareil 1 d'un niveau de pression suffisamment élevé pour être incompatible avec un déverrouillage sécurisé du couvercle 3. Tant que la configuration de verrouillage n'est pas atteinte, l'élément mobile 5A n'est pas aligné avec l'orifice 5B ménagé à travers la traverse 100, et est ainsi empêché de monter pour atteindre sa position haute d'étanchéité, car il vient alors en butée sous et contre la traverse 100 (cf. figure 4). Ceci constitue une sécurité à la mauvaise fermeture, empêchant la montée en pression de l'appareil 1 tant que la configuration de verrouillage n'est pas atteinte.

Avantageusement, le dispositif de liaison débrayable 42 est configuré pour désaccoupler l'organe de commande 10 et la pluralité de conformations motrices 18, 19 lorsque l'organe de commande 10 est déplacé de sa deuxième position (position rétractée correspondant à la configuration de verrouillage) vers sa première position (position déployée correspondant à la configuration de déverrouillage) alors que le moyen de sécurité à l'ouverture 5 est dans sa position de blocage, de telle sorte que l'organe de commande 10 est alors libre de se déplacer de sa deuxième vers sa première position, sans pour autant que les conformations motrices 18, 19 exercent le moindre effort d'entraînement sur les conformations réceptrices 16, 17.

Selon le mode de réalisation préférentiel illustré aux figures, le dispositif de liaison débrayable 42 inclut au moins:
- chaque pièce intermédiaire 20 portée par l'organe de commande 11 et montée à rotation à une extrémité de l'anse 11A formant en l'espèce ledit organe de commande 11,
- ainsi que les pênes 23, 24 guidés à coulissement par les logement 23A, 24A et qui viennent se loger dans les cavités (gâches) correspondantes 22 ménagées à la surface de chaque pièce intermédiaire 20 pour en bloquer la rotation.

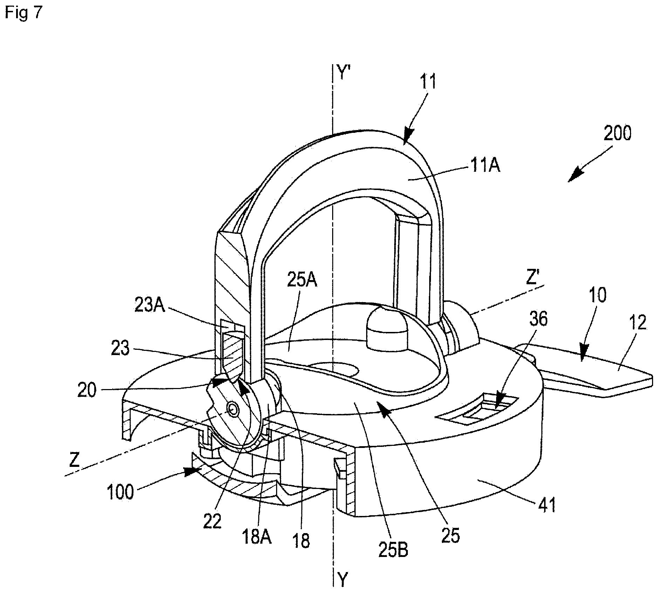

Le dispositif de liaison débrayable 42 inclut également des éléments élastiques de rappel (ressorts hélicoïdaux ou autres - non illustrés) disposés par exemple dans chaque logement 23A, 24A accueillant chaque pêne 23, 24, pour rappeler élastiquement chaque pêne 23, 24 dans une position de verrouillage dans laquelle chaque pêne 23, 24 engage respectivement la cavité 22 correspondante ménagée à la surface de la pièce intermédiaire 20 (*cf.* figure 7), empêchant ainsi la rotation des pièces intermédiaires 20 relativement à l'anse 11A. Lorsque le moyen de sécurité à l'ouverture 5 est en position de blocage, et qu'un utilisateur exerce malgré tout sur l'anse 11A un effort de déverrouillage visant à faire passer l'anse 11A de sa position rétractée (rabattue sur le couvercle) à sa position déployée, la mise en rotation du moyeu 25 est rendue impossible par l'insertion du doigt 41B dans l'orifice 5B de la traverse 100. Si l'utilisateur continue alors à forcer sur l'anse 11A, la force d'entraînement qu'il exerce sur cette dernière va surmonter la force de rappel exercée par le ressort de rappel sur chaque pêne 23, 24, de sorte que ce dernier va être repoussé en dehors de la cavité correspondante 22, permettant ainsi à l'anse 11A de pivoter relativement à chaque pièce intermédiaire 20 qui elle reste immobile. Le déplacement de l'anse 11A en rotation n'est donc plus communiqué à chaque conformation motrice 18, 19, de sorte que le moyeu 25 n'est pas soumis à un quelconque effort d'entraînement. Ce débrayage permet d'éviter de soumettre le mécanisme de verrouillage/déverrouillage à des efforts intempestifs qui pourraient entraîner une rupture de certaines pièces du mécanisme de commande. L'anse 11A peut être ensuite réarmée par l'utilisateur qui n'a qu'à simplement la ramener dans sa position rétractée, pour que chaque pêne 23, 24 se retrouve en regard de la cavité correspondante 22 et puisse à nouveau, sous l'effet de la force de rappel exercée par le ressort, revenir s'insérer dans la cavité correspondante 22 en question, afin de réaliser ainsi une liaison d'entraînement en rotation selon le deuxième axe Z-Z' des conformations motrices 18, 19.

L'appareil 1 selon l'invention présente ainsi un niveau de sécurité et de fiabilité élevé.

## Revendications

1. Appareil (1) de cuisson d'aliments sous pression comportant une cuve (2), un couvercle (3) destiné à être verrouillé relativement à la cuve (2) pour former avec elle une enceinte de cuisson apte à monter en pression, un système de verrouillage à baïonnette configuré pour assurer le verrouillage et le déverrouillage du couvercle (3) relativement à la cuve (2) par pivotement du couvercle (3) relativement à la cuve (2), un support (10) attaché audit couvercle (3) de façon que ce dernier puisse pivoter relativement audit support (10) selon un premier axe de rotation (Y-Y') entre deux positions correspondant respectivement à une configuration de déverrouillage et une configuration de verrouillage, et un organe de commande (11) du verrouillage / déverrouillage actionnable manuellement qui est d'une part attaché audit support (10) par une liaison mécanique autorisant le déplacement manuel dudit organe de commande (11) relativement audit support (10), et d'autre part connecté au couvercle (3) par un dispositif de transformation dudit déplacement manuel de l'organe de commande (11) en pivotement du couvercle (3) relativement au support (10), ledit dispositif de transformation comprenant d'une part au moins une pluralité de conformations réceptrices (16, 17) fixées au couvercle (3) et disposées à distance les unes des autres et d'autre part au moins une pluralité de conformations motrices (18, 19) distantes les unes des autres et toutes portées par ledit organe de commande (11) en différents emplacements de ce dernier, lesdites conformations motrices (18, 19) engageant respectivement lesdites conformations réceptrices (16, 17) de façon simultanée pour exercer sur elles, en réponse au déplacement de l'organe de commande (11), une pluralité de forces respectives contribuant à réaliser un couple d'entraînement du couvercle (3) en rotation relativement au support (10), ledit dispositif de transformation comprenant un moyeu (25) attaché au couvercle (3) coaxialement audit premier axe de rotation (Y-Y'), ledit moyeu (25) portant ladite pluralité de conformations réceptrices (16, 17).

2. Appareil (1) selon la revendication précédente **caractérisé en ce que** lesdites conformations réceptrices (16, 17) sont disposées à équidistance dudit premier axe de rotation (Y-Y').

3. Appareil (1) selon l'une quelconque des revendications précédentes **caractérisé en ce que** ladite pluralité de conformations réceptrices (16, 17) inclut au moins une première et une deuxième conformations réceptrices disposées à l'opposé l'une de l'autre relativement audit premier axe de rotation (Y-Y').

4. Appareil (1) selon l'une quelconque des revendications précédentes **caractérisé en ce que** l'une de ladite pluralité de conformations réceptrices (16, 17) et de ladite pluralité de conformations motrices (18, 19) forme une pluralité de conformations femelles tandis que l'autre de ladite pluralité de conformations réceptrices (16, 17) et de ladite pluralité de conformations motrices (18, 19) forme une pluralité de conformations mâles logées respectivement dans lesdites conformations femelles, chaque conformation mâle pouvant coulisser dans la conformation femelle au sein de laquelle elle est respectivement logée selon une direction de coulissement sensiblement parallèle audit premier axe de rotation (Y-Y').

5. Appareil (1) selon l'une quelconque des revendications précédentes **caractérisé en ce que** ledit organe de commande (11) est monté à pivotement relativement audit support (10) selon un deuxième axe de rotation (Z-Z') qui est perpendiculaire audit premier axe de rotation (Y-Y').

6. Appareil (1) selon la revendication précédente **caractérisé en ce que** lesdites conformations motrices comprennent au moins une première et une deuxième conformations motrices (18, 19) qui ne sont pas alignées avec ledit deuxième axe de rotation (Z-Z') de façon à se déplacer chacune selon une trajectoire circulaire autour dudit deuxième axe de rotation lors de la rotation de l'organe de commande (11) selon ledit deuxième axe de rotation (Z-Z').

7. Appareil (1) selon la revendication précédente **caractérisé en ce que** les projections orthogonales desdites première et deuxième conformations motrices (18, 19) sur un premier plan (P1) perpendiculaire audit deuxième axe de rotation (Z-Z') et dans lequel s'inscrit le premier axe de rotation (Y-Y') sont respectivement disposées au moins en partie de part et d'autre de la projection orthogonale dudit deuxième axe de rotation (Z-Z') sur ledit premier plan (P1).

8. Appareil (1) selon la revendication 6 ou 7 **caractérisé en ce que** les projections orthogonales desdites première et deuxième conformations motrices (18, 19) sur deuxième un plan (P2) perpendiculaire audit premier axe de rotation (Y-Y') et dans lequel s'inscrit le deuxième axe de rotation (Z-Z') sont respectivement disposées au moins en partie de part et d'autre de la projection orthogonale dudit premier axe de rotation (Y-Y') sur ledit deuxième plan (P2).

9. Appareil (1) selon l'une des revendications 5 à 8 **caractérisé en ce que** ledit organe de commande (11) comprend une anse (11A) qui s'étend entre deux extrémités (110, 111) traversées par ledit deuxième axe de rotation (Z-Z'), lesdites deux extrémités (110, 111) portant chacune une conformation motrice de ladite pluralité de conformations motrices (18, 19).

10. Appareil (1) selon l'une quelconque des revendications précédentes **caractérisé en ce qu'**il comprend une soupape (4) de régulation de la pression régnant au sein de l'enceinte de cuisson, montée sur le couvercle (3), ledit moyeu (25) formant un capot (25) qui contribue à délimiter un logement accueillant ladite soupape (4) de régulation.

11. Appareil (1) selon la revendication précédente **caractérisé en ce qu'**il comprend une platine (26) disposée sur le couvercle (3) et sous ledit moyeu (25), pour contribuer à former avec ce dernier ledit logement, ladite platine (26) étant fixée audit moyeu (25) et audit couvercle (3).

12. Appareil (1) selon les revendications 10 et 11 **caractérisé en ce qu'**il comprend un sous-ensemble de couvercle (300) qui inclut à la fois ledit couvercle (3) et au moins ledit support (10), le sous-ensemble de couvercle en configuration de déverrouillage et la cuve (2) étant conçus pour être réunis selon au moins un agencement relatif prédéterminé permettant audit système de verrouillage à baïonnette de verrouiller le couvercle (3) à la cuve (2) par pivotement du couvercle (3) selon ledit premier axe de rotation (Y-Y'), afin de faire passer le sous-ensemble de couvercle (300) de la configuration de déverrouillage à la configuration de verrouillage, lesdits support (10) et cuve (2) étant pourvus respectivement de conformations de support (12, 13) et de cuve (14, 15) complémentaires destinées à coopérer par emboîtement lorsque le sous-ensemble de couvercle (300) en configuration de déverrouillage et la cuve (2) sont réunis selon ledit agencement relatif prédéterminé, ledit emboîtement permettant de verrouiller la position angulaire relative du support (10) et de la cuve (2) dans un plan horizontal, ledit support (10) comprenant une traverse (100) disposée entre lesdits platine (26) et moyeu (25), ladite traverse (100) s'étendant longitudinalement entre deux extrémités opposées qui débordent radialement du couvercle (3) pour former lesdites conformations de support (12, 13), lesquelles sont configurées pour coopérer respectivement avec des logements complémentaires formant lesdites conformations de cuve (14, 15).

13. Appareil (1) selon la revendication précédente **caractérisé en ce que** lesdits moyeu (25) et platine (26) forment un premier sous-ensemble unitaire, tandis que lesdits organe de commande (11) et traverse (100) forment un deuxième sous-ensemble unitaire, ledit premier sous-ensemble unitaire comprenant également une tige d'assemblage (27) qui fait saillie de ladite platine (26) et présente d'une part une portion interne (27A) disposée au sein dudit premier sous-ensemble unitaire et passant à travers un orifice (28) ménagé à travers ladite traverse (100) pour que ledit deuxième sous-ensemble unitaire pivote autour de ladite portion interne (27A) selon ledit premier axe de rotation (U-Y'), et d'autre part une portion libre filetée (27B) passant à travers un orifice central (29) de fixation ménagé à travers le couvercle (3), ladite portion libre filetée (27B) coopérant avec un écrou (32) pour fixer ledit premier sous-ensemble unitaire au couvercle (3).

14. Appareil (1) selon la revendication précédente **caractérisé en ce que** lesdits premier et deuxième sous-ensembles unitaires sont assemblés entre eux et forment ainsi un module unitaire (200) de commande fixé de façon amovible sur le couvercle au moyen desdits tige d'assemblage (27) et écrou (32).

15. Appareil (1) selon l'une quelconque des revendications précédentes **caractérisé en ce qu'**il comprend :
- un moyen de sécurité à l'ouverture (5) sensible à la pression régnant dans l'enceinte de cuisson et susceptible d'occuper une position de blocage dans laquelle il empêche le déverrouillage du couvercle (3) lorsqu'il règne dans l'enceinte de cuisson une pression sensiblement supérieure à la pression atmosphérique,
- un dispositif de liaison débrayable (42) assurant une liaison mécanique débrayable entre ledit organe de commande (11) et ladite pluralité de conformations motrices (18, 19),
ledit organe de commande (11) étant monté mobile relativement au support (10) entre une première et une deuxième position correspondant respectivement au déverrouillage et au verrouillage du couvercle (3) relativement à la cuve (2), ledit dispositif de liaison débrayable (42) étant configuré pour désaccoupler l'organe de commande (10) et la pluralité de conformations motrices (18, 19) lorsque l'organe de commande (10) est déplacé de sa deuxième position vers sa première position alors que le moyen de sécurité à l'ouverture (5) est dans sa position de blocage, de telle sorte que l'organe de commande (10) est libre de se déplacer de sa deuxième vers sa première position.

## Patentansprüche

1. Vorrichtung (1) zum Kochen von Nahrungsmitteln unter Druck, mit einem Behälter (2), einem Deckel (3), der dazu bestimmt ist, relativ zum Behälter (2) verriegelt zu werden, um mit diesem einen Kochraum zu bilden, der geeignet ist, einen Druck aufzubauen, einem Bajonettverriegelungssystem, das konfiguriert ist, um die Verriegelung und Entriegelung des Deckels (3) relativ zum Behälter (2) durch Schwenken des Deckels (3) relativ zum Behälter (2) zu gewährleisten, einem Träger (10), der an dem Deckel (3) so angebracht ist, dass dieser relativ zu dem Träger (10) um eine erste Drehachse (Y-Y') zwischen zwei Positionen schwenken kann, die jeweils einer Entriegelungskonfiguration und einer Verriegelungskonfiguration entsprechen, und einem manuell betätigbaren Steuerorgan (11) für die Verriegelung/Entriegelung, das einerseits an dem Träger (10) durch eine mechanische Verbindung befestigt ist, die die manuelle Verschiebung des Steuerorgans (11) relativ zu dem Träger (10) zulässt, und andererseits mit dem Deckel (3) durch eine Vorrichtung zur Umwandlung der manuellen Verschiebung des Steuerorgans (11) in ein Schwenken des Deckels (3) relativ zu dem Träger (10) verbunden ist, wobei die Umwandlungsvorrichtung einerseits mindestens eine Vielzahl von Aufnahmeanordnungen (16, 17), die an dem Deckel (3) befestigt und voneinander beabstandet angeordnet sind, und andererseits mindestens eine Vielzahl von Antriebsanordnungen (18, 19) umfasst, die voneinander beabstandet sind und alle von dem Steuerorgan (11) an verschiedenen Stellen desselben getragen werden, wobei die Antriebsanordnungen (18, 19) mit den Aufnahmeanordnungen (16, 17) jeweils gleichzeitig in Eingriff kommen, um auf sie in Reaktion auf die Bewegung des Steuerorgans (11) eine Vielzahl von jeweiligen Kräften auszuüben, die dazu beitragen, ein Drehmoment zum Antrieb des Deckels (3) in Drehung relativ zum Träger (10) zu realisieren, wobei die Transformationsvorrichtung eine Nabe (25) umfasst, die am Deckel (3) koaxial zur ersten Drehachse (Y-Y') befestigt ist, wobei die Nabe (25) die Vielzahl von Aufnahmeanordnungen (16, 17) trägt.

2. Vorrichtung (1) nach dem vorhergehenden Anspruch, **dadurch gekennzeichnet, dass** die Aufnahmeanordnungen (16, 17) in gleichem Abstand von der ersten Drehachse (Y-Y') angeordnet sind.

3. Vorrichtung (1) nach einem der vorhergehenden Ansprüche, **dadurch gekennzeichnet, dass** die Vielzahl von Aufnahmeanordnungen (16, 17) mindestens eine erste und eine zweite Aufnahmeanordnung umfasst, die in Bezug auf die erste Drehachse (Y-Y') einander gegenüberliegend angeordnet sind.

4. Vorrichtung (1) nach einem der vorhergehenden Ansprüche, **dadurch gekennzeichnet, dass** eine der mehreren Aufnahmeanordnungen (16, 17) und der mehreren Antriebsanordnungen (18, 19) mehrere weibliche Anordnungen bildet, während die andere der mehreren Aufnahmeanordnungen (16, 17) und der mehreren Antriebsanordnungen (18, 19) mehrere männliche Anordnungen bildet, die jeweils in den weiblichen Anordnungen untergebracht sind, wobei jede männliche Anordnung in der weiblichen Anordnung, in der sie jeweils untergebracht ist, in einer Gleitrichtung im Wesentlichen parallel zu der ersten Drehachse (Y-Y') gleiten kann.

5. Vorrichtung (1) nach einem der vorhergehenden Ansprüche, **dadurch gekennzeichnet, dass** das Steuerorgan (11) relativ zu dem Träger (10) um eine zweite Drehachse (Z-Z'), die senkrecht zu der ersten Drehachse (Y-Y') ist, schwenkbar gelagert ist.

6. Vorrichtung (1) nach dem vorhergehenden Anspruch, **dadurch gekennzeichnet, dass** die Anordnungen mindestens eine erste und eine zweite Antriebsanordnung (18, 19) umfassen, die nicht mit der zweiten Drehachse (Z-Z') ausgerichtet sind, so dass sie sich bei der Drehung des Steuerorgans (11) um die zweite Drehachse (Z-Z') jeweils auf einer Kreisbahn um die zweite Drehachse bewegen.

7. Vorrichtung (1) nach dem vorhergehenden Anspruch, **dadurch gekennzeichnet, dass** die orthogonalen Projektionen der ersten und der zweiten Antriebsanordnungen (18, 19) auf eine erste Ebene (P1), die senkrecht zur zweiten Drehachse (Z-Z') verläuft und in die die erste Drehachse (Y-Y') eingeschrieben ist, jeweils zumindest teilweise auf beiden Seiten der orthogonalen Projektion der zweiten Drehachse (Z-Z') auf die erste Ebene (P1) angeordnet sind.

8. Vorrichtung (1) nach Anspruch 6 oder 7, **dadurch gekennzeichnet, dass** die orthogonalen Projektionen der ersten und der zweiten Antriebsanordnungen (18, 19) auf eine zweite Ebene (P2), die senkrecht zur ersten Drehachse (Y-Y') verläuft und in die die zweite Drehachse (Z-Z') eingeschrieben ist, jeweils zumindest teilweise auf beiden Seiten der orthogonalen Projektion der ersten Drehachse (Y-Y') auf die zweite Ebene (P2) angeordnet sind.

9. Vorrichtung (1) nach einem der Ansprüche 5 bis 8, **dadurch gekennzeichnet, dass** das Steuerorgan (11) einen Bügel (11A) umfasst, der sich zwischen zwei Enden (110, 111) erstreckt, die von der zweiten Drehachse (Z-Z') durchquert werden, wobei die beiden Enden (110, 111) jeweils eine Antriebsanordnung aus der Vielzahl von Antriebsanordnungen (18, 19) tragen.

10. Vorrichtung (1) nach einem der vorhergehenden Ansprüche, **dadurch gekennzeichnet, dass** sie ein Ventil (4) zur Regulierung des innerhalb des Garraums herrschenden Drucks umfasst, das auf dem Deckel (3) montiert ist, wobei die Nabe (25) eine Haube (25) bildet, die dazu beiträgt, eine Aufnahme zu begrenzen, die das Regulierungsventil (4) aufnimmt.

11. Vorrichtung (1) nach dem vorhergehenden Anspruch, **dadurch gekennzeichnet, dass** sie eine Platine (26) umfasst, die auf dem Deckel (3) und unter der Nabe (25) angeordnet ist, um dazu beizutragen, mit dieser letzteren die Aufnahme zu bilden, wobei die Platine (26) an der Nabe (25) und dem Deckel (3) befestigt ist.

12. Vorrichtung (1) nach den Ansprüchen 10 und 11, **dadurch gekennzeichnet, dass** sie eine Deckelunterbaugruppe (300) umfasst, die sowohl den Deckel (3) als auch mindestens die Halterung (10) umfasst, wobei die Deckelunterbaugruppe in der Entriegelungskonfiguration und der Behälter (2) so ausgelegt sind, dass sie in mindestens einer vorbestimmten relativen Anordnung zusammengebracht werden können, die es dem Bajonettverschlusssystem ermöglicht, den Deckel (3) durch Schwenken des Deckels (3) um die erste Drehachse (Y-Y') mit dem Behälter (2) zu verriegeln, um die Deckelunterbaugruppe (300) von der Entriegelungskonfiguration in die Verriegelungskonfiguration zu überführen, wobei der Träger (10) und der Behälter (2) jeweils Trage- (12, 13) und Behälterkonfigurationen (14, 15) aufweisen, die dazu bestimmt sind, durch Ineinandergreifen zusammenzuwirken, wenn die Deckelunterbaugruppe (300) in der Entriegelungskonfiguration und der Behälter (2) gemäß der vorbestimmten relativen Anordnung zusammengebracht werden, wobei das Ineinandergreifen es ermöglicht, die relative Winkelposition des Trägers (10) und des Behälters (2) in einer horizontalen Ebene zu verriegeln, wobei der Halter (10) einen Querträger (100) umfasst, der zwischen der Platine (26) und der Nabe (25) angeordnet ist, wobei sich der Querträger (100) in Längsrichtung zwischen zwei gegenüberliegenden Enden erstreckt, die radial über den Deckel (3) hinausragen, um die Trageanordnungen (12, 13) zu bilden, die so gestaltet sind, dass sie jeweils mit komplementären Aufnahmen zusammenwirken, die die Behälteranordnungen (14, 15) bilden.

13. Vorrichtung (1) nach dem vorhergehenden Anspruch, **dadurch gekennzeichnet, dass** die Nabe (25) und die Platine (26) eine erste einheitliche Untergruppe bilden, während das Steuerorgan (11) und der Querträger (100) eine zweite einheitliche Untergruppe bilden, wobei die erste einheitliche Untereinheit auch eine Verbindungsstange (27) umfasst, die von der Platine (26) vorsteht und einerseits einen inneren Abschnitt (27A) aufweist, der innerhalb der ersten einheitlichen Untereinheit angeordnet ist und durch eine Öffnung (28) verläuft, die durch die Traverse (100) hindurch ausgebildet ist, damit die zweite einheitliche Untereinheit um den inneren Abschnitt (27A) gemäß der ersten Drehachse (U-Y') schwenkt, und andererseits einen freien Gewindeabschnitt (27B), der durch eine zentrale, durch den Deckel (3) hindurch ausgebildete Befestigungsöffnung (29) verläuft, wobei der freie Gewindeabschnitt (27B) mit einer Mutter (32) zusammenwirkt, um die erste einheitliche Unterbaugruppe am Deckel (3) zu befestigen.

14. Vorrichtung (1) nach dem vorhergehenden Anspruch, **dadurch gekennzeichnet, dass** die erste und die zweite Untereinheit miteinander verbunden sind und so ein einheitliches Steuermodul (200) bilden, das mittels der Verbindungsstange (27) und der Mutter (32) lösbar am Deckel befestigt ist.

15. Vorrichtung (1) nach einem der vorhergehenden Ansprüche, **dadurch gekennzeichnet, dass** es umfasst:
- eine Öffnungssicherung (5), die auf den im Garraum herrschenden Druck reagiert und eine Blockierstellung einnehmen kann, in der sie die Entriegelung des Deckels (3) verhindert, wenn im Garraum ein Druck herrscht, der deutlich über dem Atmosphärendruck liegt,
- eine entkuppelbare Verbindungsvorrichtung (42), die eine entkuppelbare mechanische Verbindung zwischen dem Steuerorgan (11) und der Mehrzahl von Antriebskonfigurationen (18, 19) gewährleistet,
wobei das Steuerorgan (11) relativ zum Träger (10) zwischen einer ersten und einer zweiten Position beweglich montiert ist, die jeweils der Entriegelung und der Verriegelung des Deckels (3) relativ zum Behälter (2) entsprechen, wobei die entkuppelbare Verbindungsvorrichtung (42) so konfiguriert ist, dass sie das Steuerorgan (10) und die mehreren Antriebsausbildungen (18, 19) entkuppelt, wenn das Betätigungsorgan (10) aus seiner zweiten Position in seine erste Position bewegt wird, während sich die Öffnungssicherung (5) in ihrer Sperrposition befindet, so dass das Betätigungsorgan (10) frei ist, sich aus seiner zweiten in seine erste Position zu bewegen.

## Claims

1. A food pressure cooking appliance (1) including a bowl (2), a lid (3) intended to be locked relative to the bowl (2) to form with the latter a cooking chamber adapted to rise in pressure, a bayonet locking system configured to ensure the locking and unlocking of the lid (3) relative to the bowl (2) by swivelling of the lid (3) relative to the bowl (2), a support (10) attached to said lid (3) in such a way that the latter can swivel relative to said support (10) about a first axis of rotation (Y-Y') between two positions corresponding to an unlocking configuration and a locking configuration, respectively, and a manually operable locking/unlocking control member (11) that is, on the one hand, attached to said support (10) by a mechanical link allowing the manual movement of said control member (11) relative to said support (10), and on the other hand, connected to the lid (3) by a device for transforming said manual movement of the control member (11) into swivelling of the lid (3) relative to the support (10), said transformation device comprising on the one hand at least a plurality of driven conformations (16, 17) attached to the lid (3) and arranged remote from each other, and on the other hand, at least a plurality of driving conformations (18, 19) remote from each other and all carried by said control member (11), at different locations of the latter, said driving conformations (18, 19) respectively engaging said driven conformations (16, 17) in a simultaneous manner to exert on these latter, in response to the movement of the control member (11), a plurality of respective forces contributing to a drive torque for rotating the lid (3) relative to the support (10), said transformation device comprising a hub (25) attached to the lid (3), coaxially to the first axis of rotation (Y-Y'), said hub (25) carrying said plurality of driven conformations (16, 17).

2. The appliance (1) according to the preceding claim, **characterized in that** said driven conformations (16, 17) are arranged at equidistance from the first axis of rotation (Y-Y').

3. The appliance (1) according to any one of the preceding claims, **characterized in that** said plurality of driven conformations (16, 17) includes at least a first and a second driven conformations arranged opposed to each other relative to said first axis of rotation (Y-Y').

4. The appliance (1) according to any one of the preceding claims, **characterized in that** one of said plurality of driven conformations (16, 17) and said plurality of driving conformations (18, 19) forms a plurality of female conformations, whereas the other of said plurality of driven conformations (16, 17) and said plurality of driving conformations (18, 19) forms a plurality of male conformations respectively received inside said female conformations, each male conformation being able to slide within the female conformation inside which it is respectively received, along a sliding direction substantially parallel to said first axis of rotation (Y-Y').

5. The appliance (1) according to any one of the preceding claims, **characterized in that** said control member (11) is swivel-mounted relative to said support (10) about a second axis of rotation (Z-Z') that is perpendicular to said first axis of rotation (Y-Y').

6. The appliance (1) according to the preceding claim, **characterized in that** said driving conformations comprise at least a first and a second driving conformations (18, 19), which are not aligned with the second axis of rotation (Z-Z'), in such a way as to each move along a circular trajectory about said second axis of rotation during the rotation of the control member (11) about the second axis of rotation (Z-Z').

7. The appliance (1) according to the preceding claim, **characterized in that** the orthogonal projections of said first and second driving conformations (18, 19) on a first plane (P1) perpendicular to said second axis of rotation (Z-Z') and in which is inscribed the first axis of rotation (Y-Y') are respectively arranged at least in part on either side of the orthogonal projection of said second axis of rotation (Z-Z') on said first plane (P1).

8. The appliance (1) according to claim 6 or 7, **characterized in that** the orthogonal projections of said first and second driving conformations (18, 19) on a second plane (P2) perpendicular to said first axis of rotation (Y-Y') and in which is inscribed the second axis of rotation (Z-Z') are respectively arranged at least in part on either side of the orthogonal projection of said first axis of rotation (Y-Y') on said second plane (P2).

9. The appliance (1) according to one of claims 5 to 8, **characterized in that** said control member (11) comprises a handle (11A) that extends between two ends (110, 111) passed through by said second axis of rotation (Z-Z'), said two ends (110, 111) each carrying a driving conformation of said plurality of driving conformations (18, 19).

10. The appliance (1) according to any one of the preceding claims, **characterized in that** it comprises a valve (4) for regulating the pressure inside the cooking chamber, mounted on the lid (3), said hub (25) forming a cap (25) that helps to delimit an accommodation receiving said regulation valve (4).

11. The appliance (1) according to the preceding claim, **characterized in that** it comprises a plate (26) arranged on the lid (3) and under said hub (25), in such a way as to form said accommodation with the latter, said plate (26) being attached to said hub (25) and said lid (3).

12. The appliance (1) according to claims 10 and 11, **characterized in that** it comprises a lid subset (300) that includes both said lid (3) and at least said support (10), the lid subset in unlocking configuration and the bowl (2) being designed to be combined according to at least one predetermined relative arrangement allowing said bayonet locking system to lock the lid (3) to the bowl (2) by swivelling of the lid (3) about said first axis of rotation (Y-Y'), in such a way as to cause the lid subset (300) to switch from the unlocking configuration to the locking configuration, said support (10) and bowl (2) being respectively provided with complementary support conformations (12, 13) and bowl conformations (14, 15) intended to cooperate with each other by fitting together when the lid subset (300) in unlocking configuration and the bowl (2) are combined according to said predetermined relative arrangement, said fitting together making it possible to lock the relative angular position of the support (10) and the bowl (2) in a horizontal plane, said support (10) comprising a crossbar (100) arranged between said plate (26) and hub (25), said crossbar (100) extending longitudinally between two opposite ends that protrude radially from the lid (3) to form said support conformations (12, 13), these latter being configured to cooperate with respective complementary accommodations forming said bowl configurations (14, 15).

13. The appliance (1) according to the preceding claim, **characterized in that** said hub (25) and plate (26) form a first unitary subset, whereas said control member (11) and crossbar (100) form a second unitary subset, said first unitary subset also comprising an assembly rod (27) that protrudes from the plate (26) and has, on the one hand, an internal portion (27A) arranged within said first unitary subset and passing through a hole (28) formed through said crossbar (100) in such a way that said second unitary subset swivels around said internal portion (27A), about said first axis of rotation (Y-Y'), and on the other hand, a threaded free portion (27B) passing through a central fastening hole (29) formed through the lid (3), said threaded free portion (27B) cooperating with a nut (32) to attach said first unitary subset to the lid (3).

14. The appliance (1) according to the preceding claim, **characterized in that** said first and second unitary subsets are assembled to each other and hence form a unitary control module (200) removably attached to the lid by means of said assembly rods (27) and nut (32).

15. The appliance (1) according to any one of the preceding claims, **characterized in that** it comprises:
- an opening safety means (5) sensitive to the pressure inside the cooking chamber and liable to occupy a blocking position in which it prevents the unlocking of the lid (3) when the pressure inside the cooking chamber is substantially higher than the atmospheric pressure,
- a disengageable link device (42) ensuring a disengageable mechanical link between said control member (11) and said plurality of driving conformations (18, 19),
said control member (11) being movably mounted relative to the support (10) between a first and a second position corresponding to the unlocking and the locking, respectively, of the lid (3) relative to the bowl (2), said disengageable link device (42) being configured to uncouple the control member (10) and the plurality of driving conformations (18, 19) when the control member (10) is moved from its second position to its first position, whereas the opening safety mans (5) is in its blocking position, in such a way that the control member (10) is free to move from its second to its first position.
